# EUROPÄISCHE PATENTSCHRIFT

(11) **EP 2 890 910 B1**
(45) Veröffentlichungstag und Bekanntmachung des Hinweises auf die Patenterteilung: **04.10.2017**
(21) Anmeldenummer: 13758728.3
(22) Anmeldetag: 31.07.2013
(51) Int. Cl.: F16D 1/08, F16D 23/12, F16D 28/00

(54) **REIBUNGSKUPPLUNG MIT BETÄTIGUNGSVORRICHTUNG**
FRICTION CLUTCH COMPRISING AN ACTUATION DEVICE
EMBRAYAGE À FRICTION AVEC DISPOSITIF D'ACTIONNEMENT

(30) Priorität: 28.08.2012 DE 102012215202
(43) Veröffentlichungstag der Anmeldung: 08.07.2015
(73) Patentinhaber: Schaeffler Technologies AG & Co. KG, 91074 Herzogenaurach (DE)
(72) Erfinder: KIMMIG, Karl-Ludwig, 77883 Ottenhöfen (DE); REIMNITZ, Dirk, 77815 Bühl (DE); DIETRICH, Markus, 77704 Oberkirch (DE)
(86) Internationale Anmeldenummer: PCT/DE2013/200086
(87) Internationale Veröffentlichungsnummer: WO 2014/032662

(56) Entgegenhaltungen:
- DE-A1-102008 031 542
- DE-A1-102009 015 151
- DE-A1-102012 206 318

## Beschreibung

Die Erfindung betrifft eine Reibungskupplung mit einer Betätigungsvorrichtung insbesondere für ein Kraftfahrzeug gemäß Anspruch 1. Auch betrifft die Erfindung ein Verfahren hierfür.

Reibungskupplungen mit Betätigungsvorrichtungen sind im Stand der Technik hinlänglich bekannt. So werden Reibungskupplungen mit Tellerfedern üblicherweise über ein Ausrücklager betätigt, wobei das Ausrücklager am Getriebegehäuse angeordnet ist und die sich drehenden Tellerfederzungen der Tellerfeder der Reibungskupplung beaufschlagen. Bei einer aktuatorisch betätigten Reibungskupplung ist der Aktuator getriebefest angeordnet und verlagert auf elektronische Steuersignale hin das Ausrücklager zum Ein- oder Ausrücken der Kupplung. Dies bewirkt, dass der stehende Aktuator über das Ausrücklager die sich drehenden Tellerfederzungen betätigen muss, was grundsätzlich zu Verschleiß führt und darüber hinaus der Aktuator erhebliche Kräfte aufbringen muss, um die Kupplung über die Hebelarme der Tellerfederzungen zu betätigen. Auch ist die Anordnung des Aktuators und des Ausrücklagers auf der Getriebeseite im Hinblick auf den benötigten Bauraum eher ungünstig. Darüber hinaus verursacht die Betätigungskraft der getriebeseitig abgestützten Betätigungsvorrichtungen auch immer eine Reaktionskraft, die die Lagerung der Kupplung belastet.

Aus der DE 10 2009 015 151 A1 ist ein Aktor innerhalb der Kupplung bekannt, der auf Rollen so einwirkt, dass ein Verstellring relativ zu Rampenbereichen so verstellt wird, dass auf Grund seiner daraus resultierenden axialen Verstellung eine Druckplatte zum Schließen einer Kupplung entsprechend axial verlagert wird.

Die DE 10 2009 015 151 A1 offenbart den Oberbegriff der Ansprüche 1, 11 und 12. Es ist daher die Aufgabe der Erfindung, eine Reibungskupplung mit einer Betätigungsvorrichtung zu schaffen, mittels welcher die Reibungskupplung ein- oder ausgerückt werden kann und die einfach aufgebaut ist. Auch ist es die Aufgabe ein diesbezügliches Verfahren zu schaffen, welches eine einfache Ansteuerung erlaubt.

Diese Aufgabe hinsichtlich der Reibungskupplung wird durch eine Reibungskupplung mit einer Betätigungsvorrichtung mit den Merkmalen gemäß Anspruch 1 gelöst.

Unter Reibungskupplungen sollen hier insbesondere Drehmomentübertragungseinrichtungen, wie beispielsweise trockene oder nasse Einzel- oder Doppelkupplungen oder Bremsen, verstanden werden.

Ein Ausführungsbeispiel der Erfindung sieht eine Reibungskupplung mit einer Betätigungsvorrichtung vor, wobei die Reibungskupplung eine Druckplatte, eine Gegendruckplatte und einen Kupplungsdeckel aufweist, wobei zwischen Druckplatte und Gegendruckplatte eine Kupplungsscheibe aufnehmbar ist, wobei die Druckplatte ringförmig ausgebildet ist, die Betätigungsvorrichtung zwischen der Druckplatte und dem Kupplungsdeckel eine Rampenvorrichtung aufweist, zur axialen Verlagerung der Druckplatte und die Betätigungsvorrichtung weiterhin einen Aktuator aufweist zur Verdrehung der Druckplatte in Umfangsrichtung gegenüber dem Kupplungsdeckel, wobei der Kupplungsdeckel ein Tragelement aufweist, so dass der Aktuator sich radial innen oder außen an dem Tragelement abstützt und sich radial außen oder innen an der Druckplatte abstützt. Diese Druckplatte wird häufig auch als Anpressplatte bezeichnet.

Der Aktuator kann sich dabei insbesondere direkt oder indirekt, starr oder gelenkig, an dem Trageelement abstützen, beispielsweise über ein weiteres, ein Gelenk aufweisendes Trageelement. Das Trageelement kann auch beispielsweise Bestandteil des Kupplungsdeckels selber sein.

Vorteilhaft ist es auch, wenn der Aktuator zumindest ein Längenausdehnungselement aufweist, welches zumindest ein Piezoelement oder einen Stapel von Piezoelementen aufweist. Dadurch kann eine einfache elektrische und/oder elektronische Ansteuerung erfolgen.

Auch ist es zweckmäßig, wenn der Aktuator weiterhin ein gelenkiges Befestigungselement, ein Anlageelement und einen Kraftspeicher aufweist, wobei das Befestigungselement am Tragelement befestigt ist, der Kraftspeicher zwischen dem Anlageelement und dem Tragelement verspannt aufgenommen ist und das Längenausdehnungselement zwischen dem Befestigungselement und dem Anlageelement angeordnet ist, wobei sich das Anlageelement an der Druckplatte kraftschlüssig abstützt. Dadurch kann eine Verdrehung durch Verlängerung des Längenausdehnungselements bei Abstützung des Anlageelements vorgenommen werden.

Vorteilhaft ist weiterhin, wenn sich das Anlageelement an einem radial innen liegenden Rand oder an einem radial außen liegenden Rand der Druckplatte abstützt. Dadurch kann der Innenraum der Druckplatte für die Aufnahme der Betätigungsvorrichtung genutzt werden, was platzsparend ist. Durch ein in die Kupplung integriertes Betätigungssystem, können die Bauteile, auf denen sich die Kupplung in axialer Richtung abstützt (z.B. Kurbelwelle, Getriebeeingangswelle oder gehäusefestes Stützlager), deutlich entlastet werden.

Auch ist es zweckmäßig, wenn die Druckplatte einen axialen An- oder Absatz aufweist, wobei sich das Anlageelement an einem radial innen liegenden Rand oder einem radial außen liegenden Rand des Ab- oder Ansatzes der Druckplatte abstützt. Dadurch kann die Betätigungsvorrichtung auch seitlich der Druckplatte vorgesehen sein, wenn die Platzverhältnisse dies zulassen.

Auch ist es zweckmäßig, wenn die Betätigungsvorrichtung eine Mehrzahl von Rampenvorrichtungen und/oder eine Mehrzahl von Aktuatoren aufweist. Dadurch kann eine bessere Kraftverteilung und eine serielle Beaufschlagung genutzt werden.
Eine Rampenvorrichtung besteht aus mindestens einer Auflauframpe, die am Deckel oder an der Druckplatte eingeformt ist, oder aus mit dem Deckel oder der Druckplatte verbundenen Bauteilen bestehen. Besonders sinnvoll ist es pro Rampenvorrichtung drei oder mehr tangentiale Auflauframpen auf dem Umfang verteilt anzuordnen. Dabei stützt sich jede Auflauframpe zweckmäßiger Weise auf einem oder mehreren Wälzelementen ab. Es ist möglich, dass die Rampenvorrichtung dauerhaft oder zeitweise durch weniger Wälzelemente abgestützt wird, als Rampen vorhanden sind. Dies gilt insbesondere für den Fall, dass die Auflauframpen komplett oder teilweise durch nicht abwälzende sondern gleitende Bauteile abgestützt werden. Jede Rampenvorrichtung muss unabhängig von der Anzahl der Rampen oder der Art ihrer Gegenpartner (z.B. Wälzelemente oder Gleitelemente) an mindestens drei auf dem Umfang verteilten kleinen Kontaktstellen abgestützt werden oder auf mindestens einer Großflächigen Auflage aufliegen. Dabei darf der nicht unterstützte Bereich zwischen den Kontaktstellen auf dem Umfang nicht größer als 180° sein. Zweckmäßiger Weise sollte man bei realen Ausführungen einen Freiwinkel (Zentriwinkel) zwischen den Kontaktstellen kleiner 150° wählen. Bei Abstützung des Rampensystems auf Wälzelementen sind Anordnungen, bei denen der maximaler Winkel zwischen den Abstützpunkten 120°, 90°, 72°, 60° 45° oder 30° beträgt, besonders sinnvoll.

Auch ist es zweckmäßig, wenn die Rampenvorrichtung wenigstens eine Auflauframpe und wenigstens ein sich daran abstützendes Wälzelement aufweist, wobei die Rampenvorrichtung zwischen der Druckplatte und dem Kupplungsdeckel angeordnet ist, wobei die Auflauframpe an der Druckplatte und/oder am Kupplungsdeckel angebracht ist und das Wälzelement entweder an dem Kupplungsdeckel oder an der Druckplatte verdrehbar gehalten ist. Alternativ kann die Rampenvorrichtung auch mit Auflauframpen an der Druckplatte und dem Kupplungsdeckel ausgestattet sein oder Auflauframpen an mit der Druckplatte verbundenen Bauteilen und Rampen an mit dem Deckel verbundenen Bauteilen aufweisen. Die Wälzelemente werden dann zwischen den beiden Auflauframpen angeordnet und sind dabei vorzugsweise gegenüber den beiden Rampen in tangentialer Richtung beweglich. Wenn die Wälzelemente weder mit der Druckplatte noch dem Kupplungsdeckel fest verbunden sind, ist es zweckmäßig diese mit einem tangential beweglichen Käfig miteinander zu verbinden. Weiter kann bei einer Anordnung mit zwei Auflauframpen (an der Druckplatte und dem Kupplungsdeckel) auch auf ein Wälzelement vollständig verzichtet werden.

Vorteilhaft ist weiterhin, wenn die Ausrichtung der Aktuatoren in Umfangsrichtung gleich ist oder zumindest einzelne Aktuatoren in Umfangsrichtung in entgegen gesetzter Richtung ausgerichtet sind.

Auch ist es zweckmäßig, wenn zwei Aktuatoren mittels eines gemeinsamen Befestigungselements befestigt sind. Dies erspart Bauteile und vereinfacht die Gestaltung der Vorrichtung.

Weiterhin ist es vorteilhaft, wenn zwei Aktuatoren mittels eines gemeinsamen Anlageelements an der Druckplatte anliegen und/oder mittels eines gemeinsamen Kraftspeichers beaufschlagt sind. Dadurch kann eine einfache Konstruktion realisiert werden.

Die Aufgabe zu dem Verfahren wird gelöst mit den Merkmalen von Anspruch 11, wonach ein Verfahren zur Betätigung einer Reibungskupplung mittels einer Betätigungsvorrichtung geschaffen wird, die Reibungskupplung weist eine Druckplatte, eine Gegendruckplatte und einen Kupplungsdeckel auf, wobei zwischen Druckplatte und Gegendruckplatte eine Kupplungsscheibe aufnehmbar ist, wobei die Druckplatte ringförmig ausgebildet ist, die Betätigungsvorrichtung zwischen der Druckplatte und dem Kupplungsdeckel eine Anzahl von Rampenvorrichtungen aufweist, zur axialen Verlagerung der Druckplatte und die Betätigungsvorrichtung weiterhin eine Anzahl von Aktuatoren aufweist zur Verdrehung der Druckplatte in Umfangsrichtung gegenüber dem Kupplungsdeckel, wobei die Aktuatoren in Antriebsrichtung gleichzeitig betätigt werden und in Gegenrichtung zum Zurücksetzen zumindest einzelne Aktuatoren versetzt zueinander betätigt werden.

Auch wird die Aufgabe gelöst mit einem Verfahren nach Anspruch 12, wonach ein Verfahren zur Betätigung einer Reibungskupplung mittels einer Betätigungsvorrichtung geschaffen wird, die Reibungskupplung weist eine Druckplatte, eine Gegendruckplatte und einen Kupplungsdeckel auf, wobei zwischen Druckplatte und Gegendruckplatte eine Kupplungsscheibe aufnehmbar ist, wobei die Druckplatte ringförmig ausgebildet ist, die Betätigungsvorrichtung zwischen der Druckplatte und dem Kupplungsdeckel eine Anzahl von Rampenvorrichtungen aufweist, zur axialen Verlagerung der Druckplatte und die Betätigungsvorrichtung weiterhin wenigstens einen Aktuator, ggf. eine Anzahl von Aktuatoren aufweist zur Verdrehung der Druckplatte in Umfangsrichtung gegenüber dem Kupplungsdeckel, wobei zumindest ein Aktuator, oder einzelne der Aktuatoren, in der Antriebsrichtung langsamer bewegt werden als in der Gegenrichtung zum Zurücksetzen und bei der schnelleren Bewegung in die Gegenrichtung die Beschleunigung so hoch ist, dass die Druckplatte (12,13,200,201) durch ihre Trägheit einem Anlageelement (253,304,305,306,525,553,602) als Reibelement des Aktuators (4,5,102,250, 300,301,302,500,501,502,503,550,600) nicht folgen kann.

Dabei ist es zweckmäßig, wenn bei einer Anordnung von N Aktuatoren in Antriebsrichtung die Aktuatoren gleichzeitig betätigt werden und in Gegenrichtung weniger Aktuatoren der N Aktuatoren betätigt werden als unbetätigte Aktuatoren und die Aktuatoren nacheinander in Gegenrichtung betätigt werden.

Auch ist es zweckmäßig, wenn bei einer Anordnung von drei Aktuatoren in Antriebsrichtung die drei Aktuatoren gleichzeitig betätigt werden und in Gegenrichtung jeweils ein Aktuator betätigt wird, während die zwei verbleibenden Aktuatoren unbetätigt sind und die Aktuatoren nacheinander in Gegenrichtung betätigt werden.

Auch ist es zweckmäßig, wenn für die Aktuatoranzahl der unbetätigten Aktuatoren im Verhältnis zu der Aktuatoranzahl der betätigten Aktuatoren gilt: 3:1, 4:1, 3:2, 5:1, 4:2, 6:1, 5:2 oder 4:3.
Die beiden Verfahren, die in den Ansprüchen 11 und 12 beschrieben sind, ermöglichen beide aus der alternierenden Bewegung, bei der sich ein oder mehrere Längenausdehnungselemente mehrfach vor und zurück bewegen, eine in eine Richtung verlaufende kontinuierliche oder schrittweise erfolgende Druckplattenbewegung zu machen. Dadurch kann die Drehbewegung und Drehrichtung der Druckplatte durch die Längenausdehnungselemente und deren Bewegungsmuster bestimmt und hervorgerufen werden. Die Bewegungsrichtung eines einzelnen Längenausdehnungselementes kann dabei aber von der Bewegungsrichtung der Druckplatte abweichen. Die Längenausdehnungselemente müssen nicht immer fest mit der Druckplatte gekoppelt sein und können zeitweise Bewegungen ausführen, die nicht auf die Druckplatte übertragen werden.

Die vorliegende Erfindung wird nachfolgend anhand bevorzugter Ausführungsbeispiele in Verbindung mit den zugehörigen Figuren näher erläutert:
Dabei zeigen:
   - Figur 1: eine schematische Darstellung einer Doppelkupplung mit zwei Betätigungsvorrichtungen,
   - Figur 2: eine schematische Darstellung einer Kupplung mit einer Betätigungsvorrichtung,
   - Figur 3: eine schematische Darstellung einer Rampenanordnung,
   - Figur 4: eine schematische Darstellung einer Rampenanordnung,
   - Figur 5: eine schematische Darstellung eines Piezoaktuators,
   - Figur 6: eine schematische Darstellung einer Betätigungsvorrichtung mit Rampenanordnung und Piezoaktuator,
   - Figur 7: eine schematische Darstellung einer Rampenanordnung,
   - Figur 8: eine schematische Darstellung einer Betätigungsvorrichtung mit Rampenanordnung und Piezoaktuator,
   - Figur 9: eine schematische Darstellung einer Betätigungsvorrichtung mit Rampenanordnung und Piezoaktuator,
   - Figur 10: eine schematische Darstellung einer Betätigungsvorrichtung mit Rampenanordnung und Piezoaktuator,
   - Figur 11: eine schematische Darstellung einer Betätigungsvorrichtung mit Rampenanordnung und Piezoaktuator,
   - Figur 12: ein Diagramm,
   - Figur 13: ein Diagramm,
   - Figur 14: ein Diagramm;
   - Figur 15: ein Diagramm,
   - Figur 16: ein Diagramm,
   - Figur 17: eine schematische Darstellung einer Betätigungsvorrichtung mit Rampenanordnung und Piezoaktuator,
   - Figur 18: eine schematische Darstellung einer Betätigungsvorrichtung mit Rampenanordnung und Piezoaktuator,
   - Figur 19: eine schematische Darstellung eines Piezoaktuators, und
   - Figur 20: eine schematische Darstellung eines Piezoaktuators.

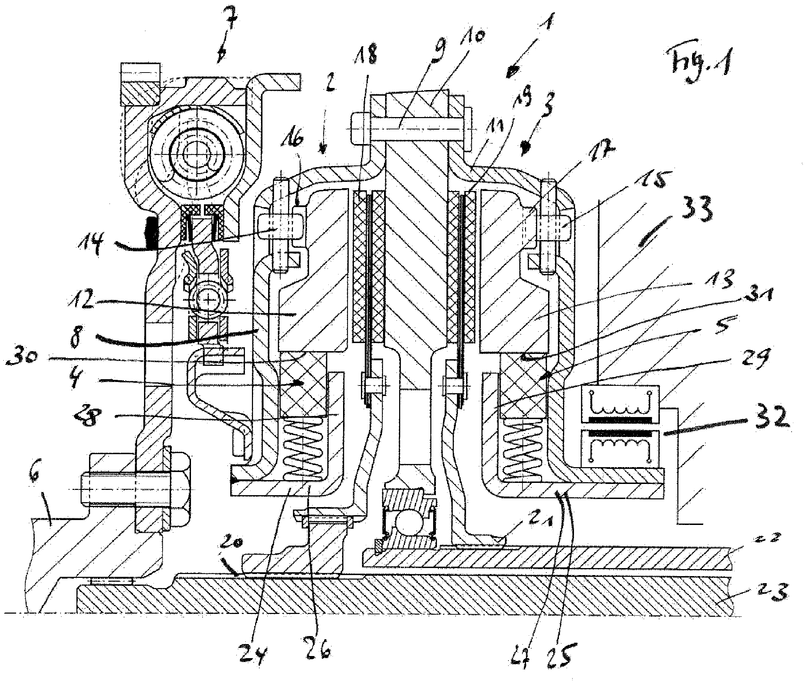

Die Figur 1 zeigt in einer schematischen Darstellung eine Doppelkupplung 1 mit den Teilkupplungen 2 und 3, wobei jeder Teilkupplung 2, 3 eine erfindungsgemäße Betätigungsvorrichtung 4, 5 zugeordnet ist. Die Doppelkupplung 1 ist als Reibungskupplung mit zwei Teilkupplungen 2, 3 ausgebildet.

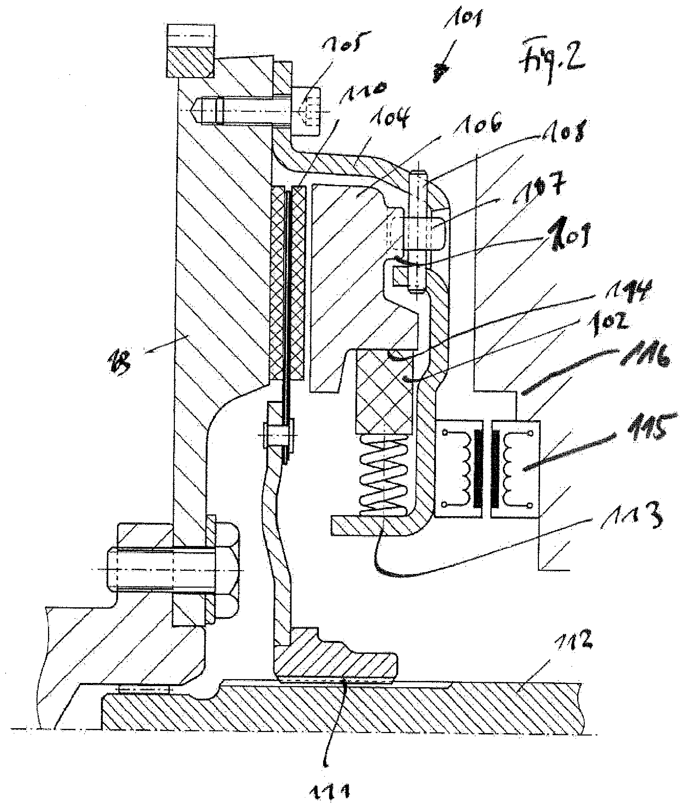

Die Figur 2 zeigt im Vergleich hierzu eine Einfachkupplung 101 als Reibungskupplung mit einer Betätigungsvorrichtung 102 zur gesteuerten Betätigung der Reibungskupplung 101.

Die Figur 1 zeigt eine Doppelkupplung 1, die eingangsseitig von einer Kurbelwelle 6 eines Antriebsmotors über einen Dämpfer 7 angetrieben wird. Dabei ist das Eingangselement der Doppelkupplung ein Kupplungsdeckel 8, welcher radial außen über eine Nietverbindung 9 mit einer Gegendruckplatte 10 verbunden ist. Mit der Nietverbindung 9 ist auch der Kupplungsdeckel 11 der zweiten Reibungskupplung 3 verbunden. In dem Kupplungsdeckel 8, 11 ist jeweils eine Druckplatte 12, 13 angeordnet, wobei im Kupplungsdeckel 8, 11 auch ein Wälzelement 14, 15 verdrehbar gelagert ist, das sich an einem Rampenbereich 16, 17 der Druckplatte 12, 13 in axialer Richtung abstützt. Bei einer Verdrehung der Druckplatte 12, 13 relativ zu dem Kupplungsdeckel 8, 11 verlagert sich die Druckplatte 12, 13 in axialer Richtung. Dabei verlagert sich die Druckplatte 12, 13 in axialer Richtung hin zur Kupplungsscheibe 18, 19, die zwischen der Gegendruckplatte 10 und der jeweiligen Druckplatte 12, 13 reibschlüssig beaufschlagt wird.

Die beiden Kupplungsscheiben 18, 19 sind radial innen über eine Verzahnung 20, 21 mit einer Getriebeeingangswelle 22, 23 drehfest verbunden.

Die Betätigungsvorrichtung 4, 5 ist radial innerhalb der ringförmigen Druckplatte 12, 13 angeordnet und stützt sich radial innen an einem Tragelement 24, 25 ab, welches radial innen mit dem Kupplungsdeckel 8, 11 drehfest verbunden ist. Das Tragelement 24, 25 weist einen in axialer Richtung verlaufenden Bereich 26, 27 auf, welcher dazu dient, die Betätigungsvorrichtung 4,5 nach radial innen abzustützen. Auch weist das Tragelement 24, 25 einen sich in radialer Richtung erstreckenden Bereich 28, 29 auf, welcher zusammen mit dem Kupplungsdeckel 8, 11 die Betätigungsvorrichtung aufnimmt.

In Figur 2 ist die Reibungskupplung 101 auf einem Schwungrad 103 als Gegendruckplatte angeordnet, wobei auf dem Schwungrad 103 als Gegendruckplatte der Kupplungsdeckel 104 mittels des Befestigungsmittels 105 drehfest angeordnet und verbunden ist. Der Kupplungsdeckel 104 trägt die Druckplatte 106, wobei an dem Kupplungsdeckel 104 ein Wälzelement 107 mittels einer Drehachse 108 drehbar angeordnet ist, welches sich an einer Rampenvorrichtung 109 der Druckplatte 106 abstützt.

Bei Verdrehung der Druckplatte 106 relativ zu dem Kupplungsdeckel 104 verlagert sich die Druckplatte 106 in axialer Richtung, beispielsweise hin zur Kupplungsscheibe 110. Dabei ist die Kupplungsscheibe 110 radial innen mit der Verzahnung 111 mit einer Getriebeeingangswelle 112 drehfest verbunden. Zur Verdrehung der Druckplatte 106 ist die Betätigungsvorrichtung 102 vorgesehen, die radial zwischen der Druckplatte 106 und einem Tragelement 113 angeordnet ist, welches in axialer Richtung von dem Kupplungsdeckel 104 absteht.

Dabei wird vorteilhaft ein Selbstverstärkungseffekt einer auf der Rampenvorrichtung axial abgestützten Druckplatte mit einem Aktuator kombiniert, der mittels Piezoelementen ausgestattet ist.

Der Aktuator mit Piezoelementen, im Weiteren auch als Piezoaktuator bezeichnet, kann vorteilhaft auch für selbstverstärkende Einfach- oder Doppelkupplungen zum Einsatz kommen. Der Piezoaktuator und ggf. auch die diesbezügliche Steuereinheit, auch Piezosteuereinheit genannt, kann direkt zwischen dem Kupplungsdeckel 8, 11, 104 und einer vorzugsweise frei drehenden Druckplatte 12, 13, 106 angeordnet sein, so dass insgesamt ein sehr einfacher Gesamtaufbau möglich ist.

Vorteilhafterweise kann solch ein Piezoaktuator entgegen seiner Längenausdehnung vorgespannt sein, beispielsweise durch sich selber oder zusätzliche Federelemente. So könnte der Piezoaktuator sowohl drückend als auch ziehend wirken.

Mit dem Aktuator ist eine einfache und spielfreie Verbindung zwischen einer relativ zu einem Kupplungsdeckel verdrehbaren Kupplungsdruckplatte 12, 13, 106 und dem Kupplungsdeckel selbst möglich. Der Aktuator kann weiterhin auch die radiale Zentrierfunktion für die Druckplatte 12, 13, 106 übernehmen. Dadurch kann ein weiteres Konstruktionselement entfallen.

Der Aktuator als Piezoaktuator zeichnet sich weiterhin durch eine hohe Dynamik aus. Zusätzlich ist durch ihn die Kupplung in sehr kleinen Schritten mit nur sehr kleinen Drehmomentsprüngen des übertragbaren Drehmoments der Kupplung steuerbar. Dies bewirkt einen hohen Komfort, der insbesondere bei Fahrzeugen mit automatisiertem Getriebe vorteilhaft ist.

Der Piezoaktuator ist grundsätzlich auch für andere Bewegungs- und Steueraufgaben bzw. diesbezügliche Vorrichtungen einsetzbar.

In den Figuren 1 und 2 ist ein Ausführungsbeispiel einer Rampenvorrichtung mit einer um eine deckelfeste Achse drehbar gelagerten Rolle dargestellt, die auf Rampen an der Rückseite der Druckplatte laufen. Andere Ausführungsformen für Rampensysteme sind auch anwendbar.

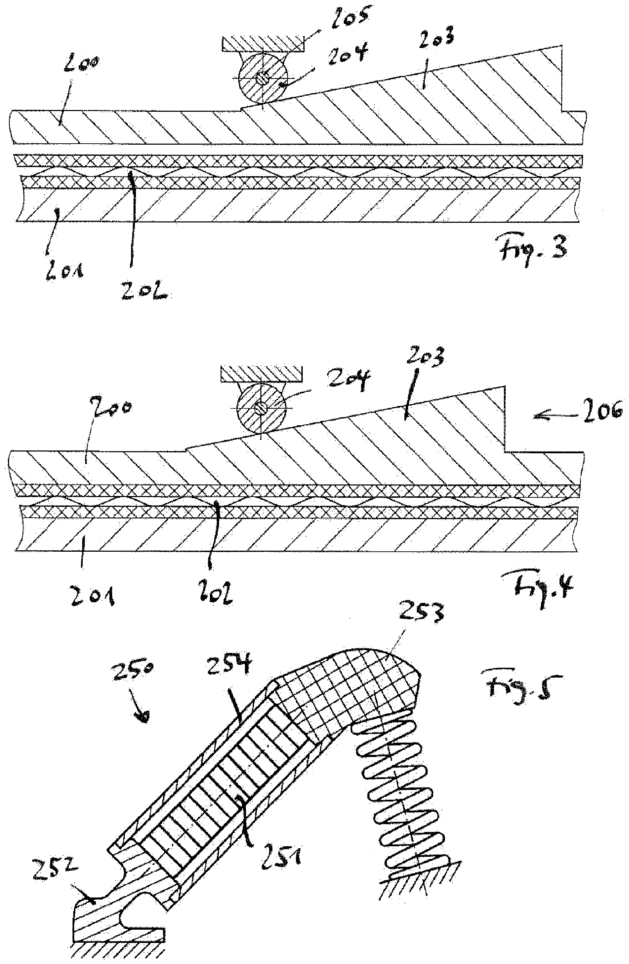

Die Figur 3 zeigt die Anordnung einer Druckplatte 200, einer Gegendruckplatte 201, zwischen welchen der Belag 202 einer Kupplungsscheibe angeordnet ist. An der Druckplatte 200 ist eine Rampenvorrichtung 203 angeordnet, an der sich eine Rolle 204 als Wälzelement abstützt, wobei die Rolle 204 um die Achse am Gehäuse verdrehbar angeordnet ist. Die Figur 3 zeigt eine Druckplatte 201, die vom Reibbelag 202 beabstandet angeordnet ist, so dass die Kupplung ausgerückt ist und keine Kräfte/Momente überträgt.

Die Figur 4 zeigt eine Betriebssituation, bei welcher die Druckplatte 200 relativ zur Gegendruckplatte 201 in Umfangsrichtung gemäß Pfeil 206 verdreht ist, so dass die Rampenvorrichtung 203 relativ zur Rolle 204 verschoben ist. Dadurch stützt sich die Rolle 204 an der Rampenvorrichtung 203 an einem Punkt ab, der weiter oben an der Rampe angeordnet ist. Dies bewirkt, dass die Druckplatte 200 in axialer Richtung auf die Gegendruckplatte 201 hin verlagert ist und dadurch den Reibbelag 202 beaufschlagt. Die Druckplatte 200 und die Gegendruckplatte 201 liegen reibschlüssig an dem Reibbelag 202 der Kupplungsscheibe an und die Kupplung kann ein Drehmoment übertragen.

Erfindungsgemäß ist ein Mechanismus vorhanden, der direkt oder indirekt zwischen der Druckplatte und dem Kupplungsdeckel angeordnet ist, welcher die Druckplatte 12, 13, 106 in Richtung der Kupplungsscheibe 18, 19, 110 verlagert, wenn die Druckplatte 12, 13, 106 relativ zu dem Kupplungsdeckel 8, 11, 104 verdreht wird. Durch die Ausgestaltung der Rampenkontur, die für die Druckplatte das Verhältnis von Verdrehwinkel zu Axialweg, bzw. Verdrehkraft zu erzeugter Anpresskraft festlegt, lässt sich die Selbstverstärkung und die Regelbarkeit der Kupplung beeinflussen. Je weniger Reibung und Hysterese in diesem Rampenmechanismus auftreten, desto geringer ist die erforderliche Betätigungsenergie der Kupplung bzw. desto geringer ist die erforderliche Verdrehkraft.

Zum Verdrehen der Druckplatte wird ein Aktuator mit Piezoantrieb verwendet, der mindestens ein Piezoelement oder eine Mehrzahl von Piezoelementen aufweist, das die Bewegung der Druckplatte im Uhrzeigersinn oder im Gegenuhrzeigersinn relativ zum Kupplungsdeckel bewirkt. Der Aktuator 4, 5, 102 ist in der Kupplung nahe der Druckplatte 12, 13, 106 angeordnet. Vorteilhaft ist der Aktuator 4, 5, 102 radial innerhalb der Druckplatte 12, 13, 106 angeordnet. Dabei wirkt der Aktuator 4, 5, 102 auf eine oder mehrere zylindrische konzentrisch zur Kupplungsdrehachse verlaufende Kontaktflächen 30, 31, 114 der Druckplatte 12, 13, 106. Diese Kontaktflächen 30, 31, 114 können direkt am Innendurchmesser der Druckplatte angeordnet sein. Alternativ können sie auch auf einem größeren Durchmesser angeordnet werden, indem die Rückseite der Druckplatte12, 13, 106 gestuft ausgeführt ist, wie es in Figur 2 dargestellt ist.

Um große Durchmesser der Kontaktflächen erreichen zu können, kann der Antriebsmechanismus auch axial zwischen der Druckplatte und dem Kupplungsdeckel angeordnet sein, um weit außen liegende Kontaktflächen zu erreichen.

Alternativ kann der Aktuator auch von außen auf den Außendurchmesser oder andere nach außen weisende Flächen der Druckplatte wirken.

Die Kontaktflächen der Druckplatte können direkt aus dieser ausgeformt sein oder alternativ durch zusätzliche mit der Druckplatte wirkverbundene Bauteile gebildet werden. Eine mehrteilige Bauweise ermöglicht insbesondere den Einsatz von verschleißfesten Materialien, Reibbelägen, Reibbeschichtungen, Wärmeisolierungen und/oder eine mechanische Abkopplung von Verzügen und Ausdehnungen der Druckplatte.

Da die erzielbare Längenänderung von Piezoelementen grundsätzlich eher gering ist, sind für große Positionsänderungen der Druckplatte viele Hübe der Piezoelemente notwendig, so dass die Druckplatte schrittweise in Umfangsrichtung verschoben, also verdreht wird.

Um aus einer alternierenden Bewegung, bei der sich das Piezoelement immer vor und zurück bewegt, eine in eine Richtung verlaufende kontinuierliche oder schrittweise erfolgende Druckplattenbewegung zu erzeugen, treiben die Piezoelemente Anlageelemente als Reibelemente an, die auf die Kontaktflächen der Druckplatte einwirken. Kraftspeicher, wie beispielsweise Schraubenfedern, die sich am Kupplungsdeckel oder der Druckplatte abstützen, drücken diese Anlageelemente in radialer Richtung gegen die Druckplatte bzw. gegen die Kontaktfläche der Druckplatte, wodurch ein Reibkontakt zwischen den beiden Bauteilen entsteht, der je nach Bewegung des Piezoelementes haftet und so die Kraftübertragung vom Piezoelement auf die Druckplatte ermöglicht oder durchrutscht und so dem Piezoelement und der Druckplatte eine unterschiedliche Bewegungsgeschwindigkeit und/oder Bewegungsrichtung ermöglicht.

Die Bewegung, die sich an der Druckplatte einstellt, hängt von der Bewegungsgeschwindigkeit, der Beschleunigung und dem Ansteuerschema der Piezoelemente ab. Nachfolgend werden nun unterschiedliche Ausführungsvarianten und Steuer- bzw. Regelungsmethoden für den Piezoantrieb vorgestellt.

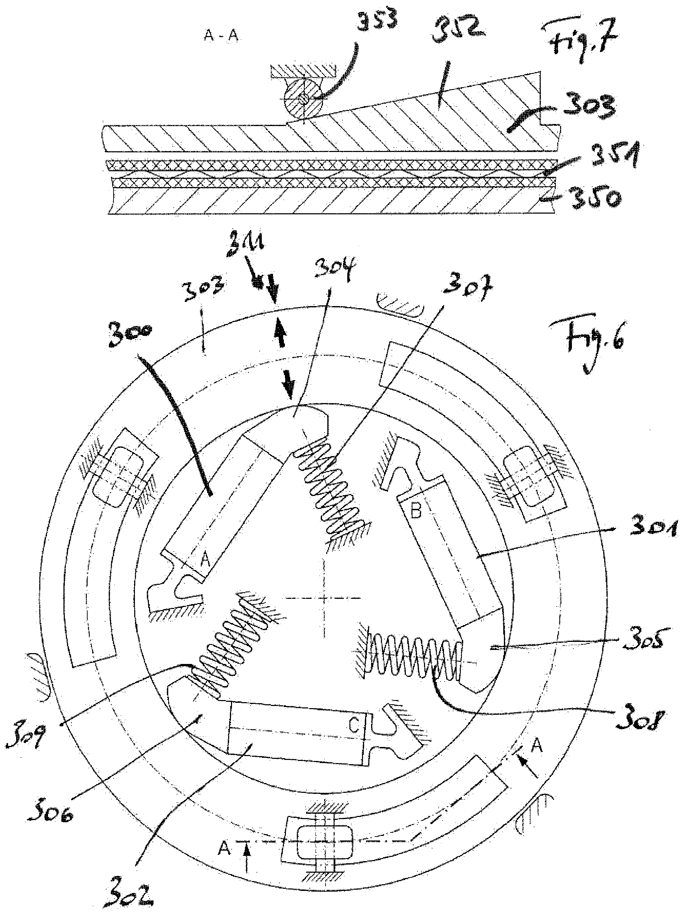

Ein erstes Ausführungsbeispiel einer Verwendung von Piezoaktuatoren zeigt die Figur 6 in einer schematischen Darstellung. Dabei sind drei Piezoaktuatoren 300, 301 und 302 angeordnet.

Der Piezoaktuator 250 ist in Figur 5 detailliert dargestellt. Kernelement des Piezoaktuators 250 ist ein Piezoelement 251, das einzeln oder wie in Figur 5 gezeigt, als Stapel von Piezoelementen angeordnet ist.

Das Piezoelement oder die Piezoelemente als Längenausdehnungselement sind zwischen den beiden Endstücken 252 und 253 angeordnet und eingespannt. Dabei ist zwischen den beiden Endstücken 252 und 253 ein Aktuatorgehäuse 254 vorgesehen, das die beiden Endstücke 252, 253 miteinander verbindet und welches die Piezoelemente vorspannt. Die Endstücke 252, 253 sind auch als Anlageelement 253 und als gelenkiges Befestigungselement 252 ausgebildet.

Das Anlageelement 252 dient der Anlage des Aktuators an der Druckplatte bzw. an der Kontaktfläche der Druckplatte.

Das gelenkige Befestigungselement dient der Befestigung des Aktuators an der dem Anlageelement gegenüberliegenden Seite, also an dem Tragelement.

Dehnt sich das Längenausdehnungselement, hier das Piezoelement, aus, drückt es die Endstücke 252, 253 auseinander und dehnt das Aktuatorgehäuse 254. Da das eine Endstück 252 möglichst steif mit dem Kupplungsdeckel wirkverbunden ist, führt die Ausdehnung zum Verschieben des anderen freien Endstücks 253, das zu einem Reibelement ausgeformt oder mit einem Reibelement verbunden ist.

In diesen Unterlagen wird das Längenausdehnungselement synonym für das Piezoelement verwendet, obgleich auch andere Elemente alternativ als Längenausdehnungselemente verwendbar sind.

Bewirkt die elektrische Ansteuerung des Piezoelements, dass dieses wieder seine Ausgangsstellung einnimmt, so zieht das vorgespannte Aktuatorgehäuse das Reibelement wieder zurück, wobei der Aktuator bei ausreichend großer Vorspannung auch Kräfte entgegen seiner vorhergehenden Ausdehnungsrichtung auf die Druckplatte ausüben kann.

Die Vorspannung des Piezoelements ist entscheidend für die bidirektionale Funktionsweise des Aktuators und kann durch verschiedene konstruktive Maßnahmen realisiert werden.

Die Figur 5 zeigt ein Ausführungsbeispiel, bei welchem die Materialelastizität des Gehäuses 254 ausgenutzt wird. Es gibt aber auch Varianten, bei welchen die Vorspannung durch in das Gehäuse eingeformte Balg- oder Membranfedern realisiert wird. Auch kann ein separates Federelement, wie beispielsweise eine Tellerfeder, eine Schraubenzug- oder Schraubendruckfeder oder eine Dehnschraube verwendet werden.

Der Aufbau eines Ausführungsbeispiels eines Piezoantriebs ist in Figur 6 schematisch dargestellt. Dabei sind drei am Umfang der Druckplatte 303 verteilt angeordnete Piezoaktuatoren 300, 301, 302 vorgesehen, die gemeinsam die Druckplatte 303 in die gewünschte Richtung verdrehen können und so über das Rampensystem ein Öffnen und Schließen der Kupplung bewirken.

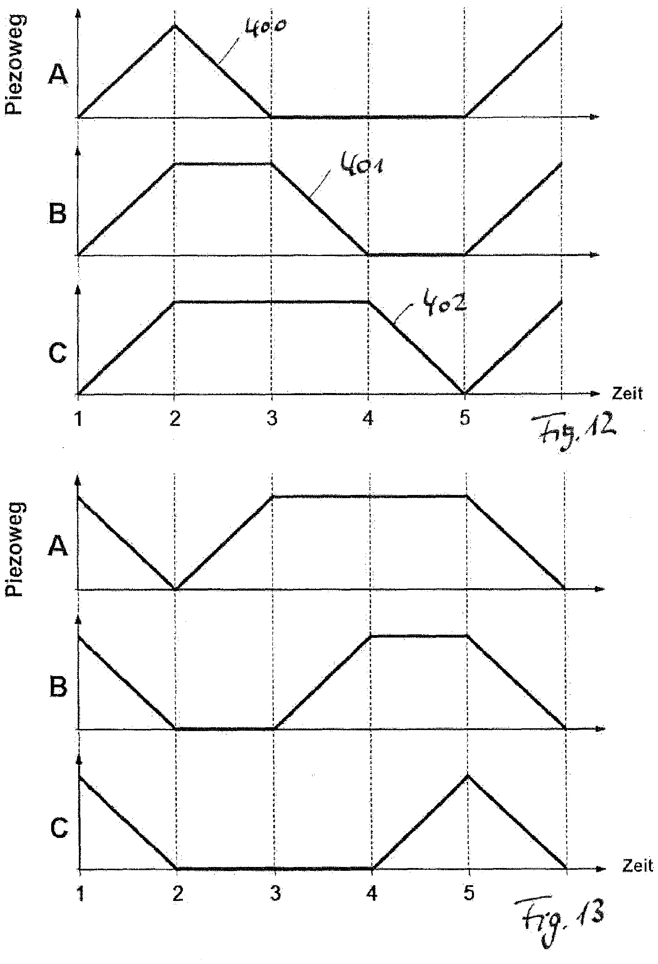

Die Bewegungsrichtung der Druckplatte 303 hängt von gewählten Ansteuerschema und dem daraus resultierenden Bewegungsmuster der drei Piezoaktuatoren 300, 301, 302 ab. Das Bewegungsmuster für einen Vorwärtsschritt der Druckplatte ist im Diagramm der Figur 12 schematisch dargestellt. Dabei ist der Bewegungsablauf in Zwischenschritten dargestellt, die auf der x-Achse mit 1 bis 5 dargestellt sind. Die Zwischenschritte 1 bis 5 des Diagramms der Figur 12 können durch die Figuren 6 und 8 bis 11 nachvollzogen werden.

Das Funktionsprinzip des Piezoantriebs beruht darauf, dass die drei Piezoaktuatoren 300, 301, 302 die Druckplatte 303 über ihre Reibkontakte der Anlageelemente 304, 305, 306 gemeinsam verdrehen können, wenn sie sich gleichzeitig ausdehnen oder zusammenziehen. Um Anschließend wieder einen gemeinsamen Hub in die gleiche Richtung auszuführen, müssen die Piezoaktuatoren erst wieder in ihre Ausgangsstellung zurückkehren. Dies erfolgt, indem sich immer nur ein Element in seine Ausgangsstellung zurückbewegt, während die beiden anderen Elemente stillstehen. Da an den Reibstellen der Anlageelemente, die durch die Kraftspeicher 307, 308, 309 hervorgerufene Normalkraft, nie aktiv abgesenkt wird, treten auch beim Zurücksetzen der Piezoelemente Reibkräfte auf, die der erwünschten Bewegungsrichtung der Druckplatte 303 entgegen wirken. Da diese Reibstelle beim Zurücksetzen aber immer gegen die beiden anderen stillstehenden Anlageelemente arbeitet und deren gemeinsame Reibkraft immer größer ist, als die des angetrieben Anlageelementes, bleibt die Druckplatte 303 stehen und das angetriebenen Anlageelement rutscht auf der Kontaktfläche der Druckplatte 303 entlang, bis der Piezoaktuator wieder seine Ausgangsstellung erreicht hat. Dieser Vorgang wird dreimal wiederholt, indem jeweils ein anderer Piezoaktuator bewegt wird, bis alle drei Piezoaktuatoren wieder in ihre Ausgangsstellung zurückgekehrt sind. Anschließend können die drei Piezoaktuatoren 300, 301, 302 wieder gleichzeitig einen gemeinsamen Hub ausführen und die Druckplatte 303 wieder ein Stück weiterdrehen.

Die Figur 7 stellt einem Schnitt der Figur 6 entlang der Linie A-A dar. Die Figur 7 zeigt dabei eine Anordnung der Druckplatte 303 mit Gegendruckplatte 350, Reibbelag 351 der Kupplungsscheibe und Rampenvorrichtung 352 mit Wälzelement 353. Die Figur 7 zeigt eine Betriebssituation, bei welcher die Druckplatte 303 relativ zur Gegendruckplatte 350 so angeordnet ist, dass die Rampenvorrichtung 352 relativ zum Wälzelement 353 am Beginn der Steigung der Rampe angeordnet ist. Dies bewirkt, dass die Druckplatte beabstandet vom Reibbelag ist und die Kupplung kein Moment überträgt.

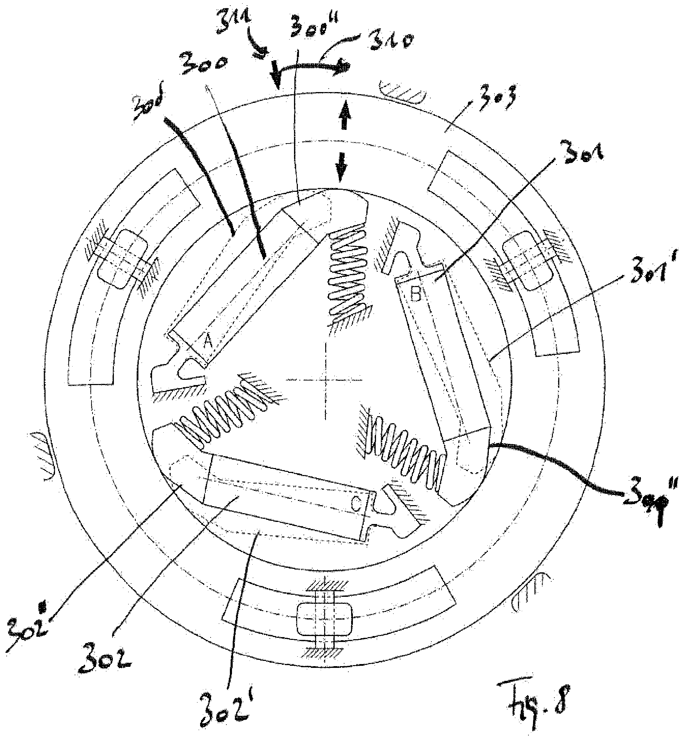

Die Figur 8 zeigt die Anordnung der Piezoaktuatoren 300, 301 und 302, die ausgehend von der Position 300', 301', 302' durch Verlängerung des jeweiligen Piezoaktuators in die Position 300", 301" und 302" verlängert wurden. Dadurch erfolgt eine Verdrehung der Druckplatte 303 im Uhrzeigersinn, wobei der Drehwinkel durch die Verdrehung der Pfeile 310 dargestellt ist. In der Ausgangsstellung gemäß Figur 6 liegen die drei Pfeile 311 auf einer radialen Linie, wobei in der Figur 8 die Pfeile 311 zueinander verdreht sind.

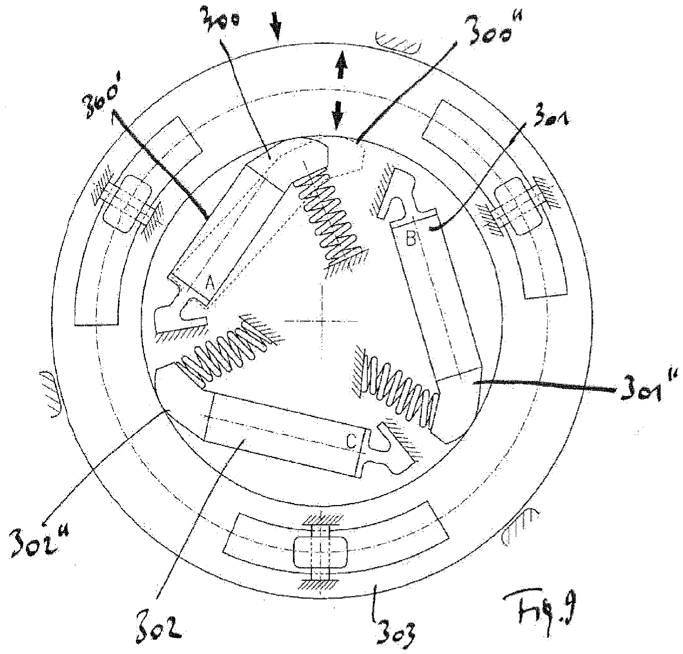

Die Figur 9 zeigt eine weitere Betriebssituation, in welcher die Aktuatoren 301 und 302 in der ausgefahrenen Stellung 301" und 302" sind, während der Aktuator 300 aus der Stellung 300" in die Stellung 300' verfahren wurde.

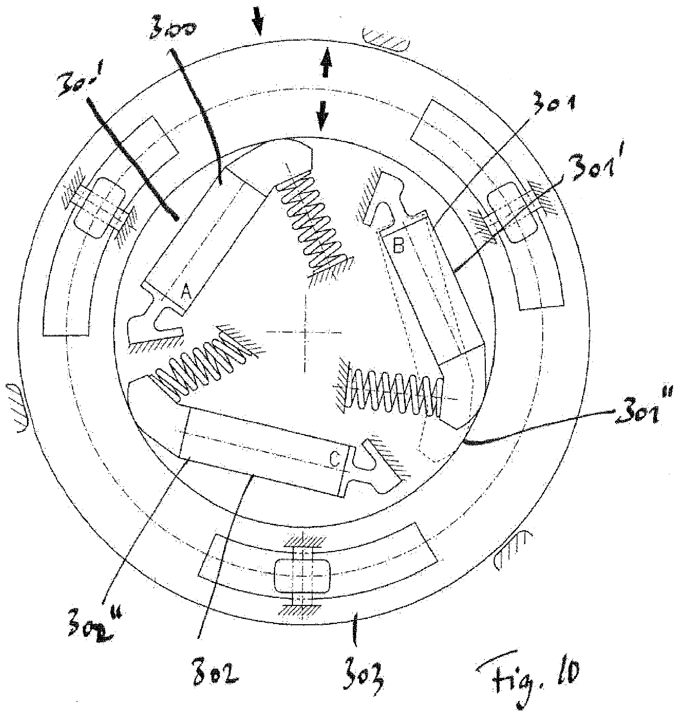

Die Figur 10 zeigt eine weitere Betriebssituation mit den Aktuatoren 300, 301, 302, wobei der Aktuator 302 in der Stellung 302" angeordnet ist. Der Aktuator 300 ist in der Stellung 300' angeordnet und der Aktuator 301 wird von der Position 301" in die Position 301' verfahren.

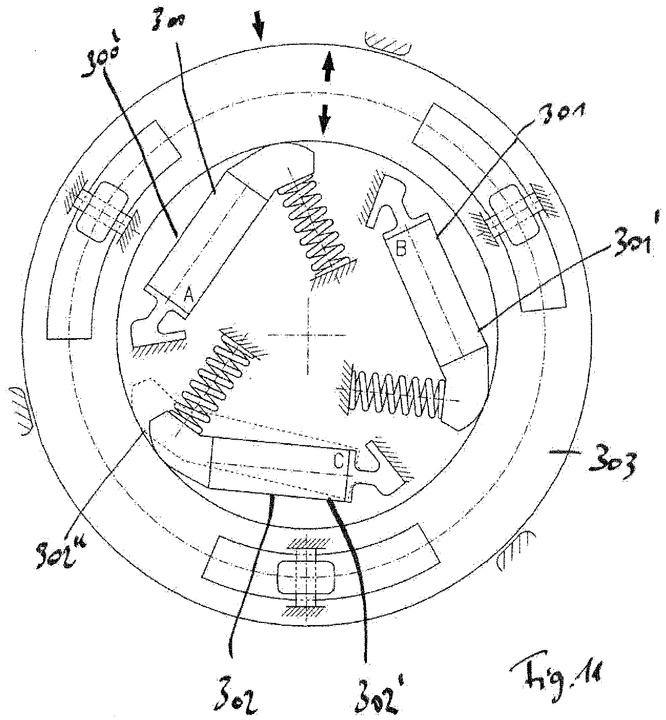

Die Figur 11 zeigt, dass der Aktuator 300 in der Stellung 300' angeordnet ist. Der Aktuator 301 ist in der Stellung 301' angeordnet, während der Aktuator 302 von der Stellung 302" in die Stellung 302' verfahren wird. Die Verfahrsituationen der Figuren 9, 10 und 11 erfolgen ohne eine Verdrehung der Druckplatte 303.

Die Figur 12 zeigt dies in einem Diagramm in einer schematischen Darstellung. Die Linie 400 stellt den Betätigungsweg des Aktuators 300 dar, die Linie 401 stellt den Betätigungsweg des Aktuators 301 dar und die Linie 402 stellt den Betätigungsweg des Aktuators 302 dar.

Ausgehend von der unbetätigten Situation werden von der Stellung 1 zur Stellung 2 alle drei Aktuatoren 300, 301 und 302 durch Verlängerung betätigt. Dadurch wird die Druckplatte 303 verdreht. Dies bewirkt eine axiale Verlagerung der Druckplatte 303.

Von Schritt 2 zum Schritt 3 wird nur der Aktuator 300 in seiner Länge verkürzt, so dass das Anlageelement des Aktuators 300 an der Kontaktfläche der Druckplatte 303 reibend vorbeigeführt wird, während die Aktuatoren 301 und 302 unverändert in ihrer Länge sind. Nachdem der Aktuator 300 seine verkürzte Ausgangslänge wieder erreicht hat, wird der Aktuator 301 in seiner Länge verkürzt, was zwischen dem Schritt 3 und dem Schritt 4 erfolgt. Nachdem auch der Aktuator 301 seine Ausgangslänge angenommen hat, wird zwischen Schritt 4 und Schritt 5 der Aktuator 302 in seiner Länge wieder verkürzt. Im Schritt 5 liegen alle drei Aktuatoren 300, 301 und 302 in der Ausgangslänge vor, so dass im nächsten Schritt wiederum eine gemeinsame Verlängerung möglich ist.

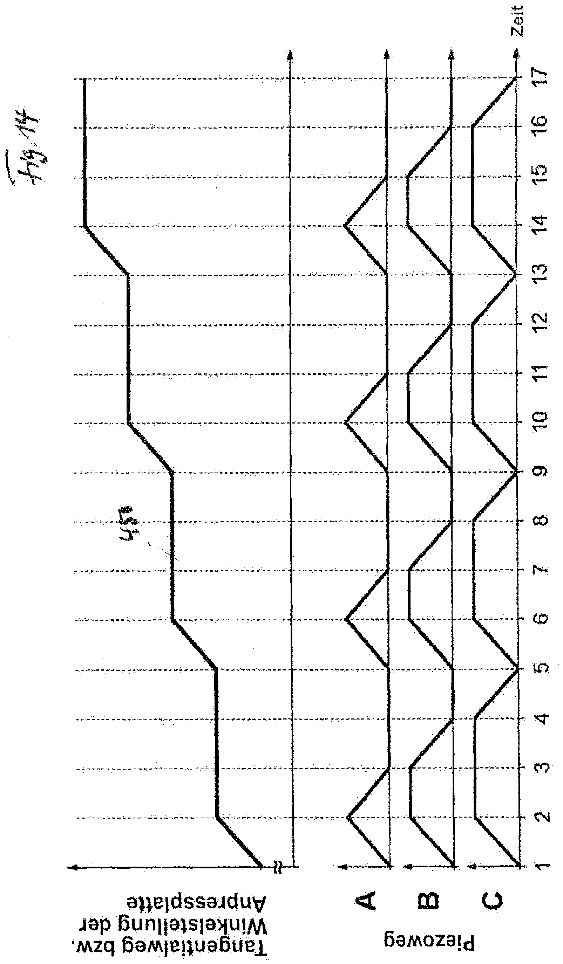

Wie sich durch Wiederholung des Bewegungsmusters viele kleinere Bewegungsschritte der Druckplatte 303 aneinanderreihen lassen, um einen großen Verfahrweg bzw. einen großen Verdrehwinkel zu realisieren, zeigt das Diagramm der Figur 14.

Die Figur 14 zeigt im oberen Bildteil mit der Kurve 450, wie über eine Vielzahl von Schritten der Drehwinkel der Anpressplatte schrittweise erhöht werden kann. Dazu werden zwischen Schritt 1 und Schritt 2 alle Aktuatoren 300, 301 und 302 verlängert, wobei zwischen den Schritten 2 bis 5 schrittweise jeweils einer der Aktuatoren verkürzt wird, so dass in Schritt 5 nach Schritt 6 eine gemeinsame Verlängerung wieder erfolgen kann. Diese Vorgehensweise wiederholt sich auch im Schritt von Schritt 9 zu Schritt 10 sowie von Schritt 13 zu Schritt 14, so dass insgesamt eine vierfache Verdrehung der Druckplatte 303 gemäß dem Ablauf der Figur 14 erläutert werden kann.

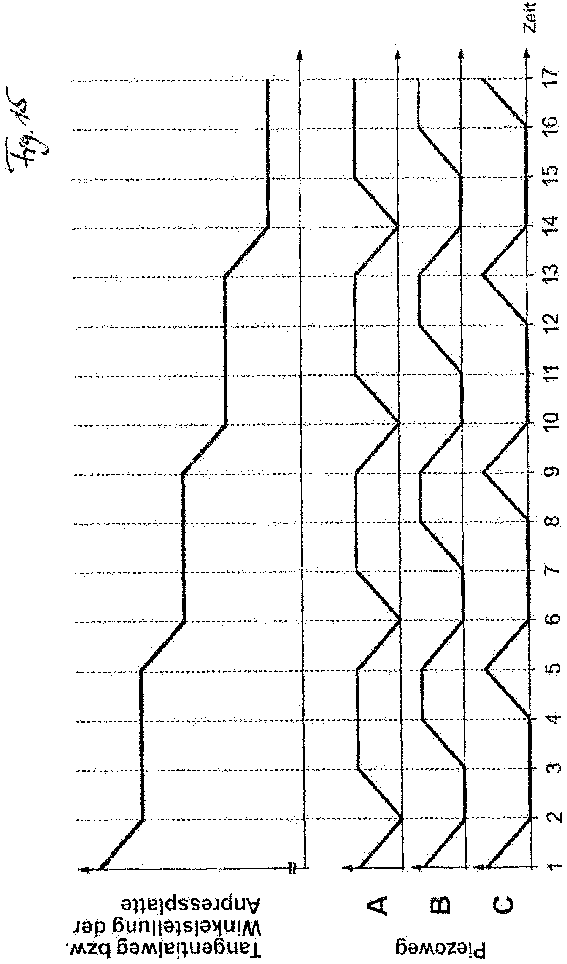

Die Figur 13 zeigt einen Ablauf einer Schrittfolge, nach der eine Rückwärtsdrehung oder Rückwärtsbewegung der Druckplatte 303 angesteuert werden kann. Von Schritt 1 zu Schritt 2 erfolgt eine gemeinsame Verkürzung der Länge der Aktuatoren, so dass die Druckplatte 303 sich zurückdreht. Zwischen Schritt 2 und Schritt 3 wird der Aktuator 300 verlängert, während zwischen Schritt 3 und Schritt 4 der Aktuator 301 verlängert wird und zwischen Schritt 4 und Schritt 5 der Aktuator 302 verlängert wird. Dies geschieht jeweils ohne Verdrehung der Druckplatte 303, da jeweils nur ein Aktuator 300, 301, 302 in seiner Länge verändert wird, wobei die beiden anderen Aktuatoren bei gleicher Länge still stehen. Durch ein Wiederholen kann auch ein mehrfaches Zurückdrehen gemäß Figur 15 vorgenommen werden.

Die Diagramme der Figuren 13 und 15 zeigen jeweils ein weiteres Bewegungsschema, das die Bewegung der Druckplatte 303 in die andere Drehrichtung hervorruft, die auch als Rückwärtsbewegung bezeichnet werden kann.

Der Piezoantrieb kann jederzeit von dem einen in das andere Bewegungsschema wechseln und so die Bewegungsrichtung der Druckplatte ändern. Dies und die kleinen Schritte, die eine sehr genaue und sehr fein abgestufte Positionierbarkeit der Druckplatte ermöglichen, sorgen für eine sehr exakte und hochdynamische Regelbarkeit des übertragenen Kupplungsmoments.

Um die Leistungsfähigkeit und die Betriebssicherheit des Piezoantriebs zu vergrößern, können statt drei auch mehrere Piezoaktuatoren auf eine Druckplatte wirken. Beim Ansteuern muss immer darauf geachtet werden, dass während dem Zurücksetzen der Aktuatoren die Haltekraft, die die stillstehenden Kontaktstellen auf die Druckplatte ausüben, immer deutlich größer ist, als die Reibkraft an den zurückgleitenden Aktuatoren. Da so ein ungewolltes Verdrehen der Druckplatten sicher vermieden wird. Es ist daher sinnvoll, dass immer deutlich mehr Kontaktstellen die Druckplatte in ihrer Position halten, als jene die zurückgleiten. Aber nicht nur das Zahlenverhältnis zwischen stehenden und gleitenden Aktuatoren muss berücksichtigt werden, sondern auch deren Kraftverteilung, da diese beispielsweise durch die Fliehkraft, die Bewegungsrichtung (Selbstverstärkungs- und Selbstabschwächungseffekt) und die Massenträgheiten beeinflusst werden kann. In den meisten Fällen reicht es aus, beim Ansteuern immer darauf zu achten, dass beim Zurücksetzen der Aktuatoren immer deutlich mehr Kontaktstellen die Druckplatte in ihrer Position halten, als jene die zurückgleiten, damit ein ungewolltes Verdrehen der Druckplatte sicher vermieden wird.

Erhöht man die Aktuatoranzahl können beim Zurückdrehen z.B. 3:1, 4:1, 3:2, 5:1, 4:2, 6:1, 5:2 oder 4:3 Aktuatoren arbeiten. Auch ist es möglich das Bewegungsschema flexibel zur ändern, je nachdem, ob die Reibkräfte zwischen der Kupplungsscheibe und der Druckplatte, beziehungsweise die Trägheitskräfte der drehenden Druckplatte die gewünschten Verdrehrichtung unterstützen oder ihr entgegenwirken. So kann beispielsweise die Anzahl der Reibstellen, die gleichzeitig die Druckplatte halten zugunsten derer, die gleichzeitig gleiten, reduziert werden, wenn die äußeren Kräfte die Druckplatte sowieso in die gewünschte Drehrichtung schieben wollen. Dies ermöglicht eine höhere Verstellgeschwindigkeit.

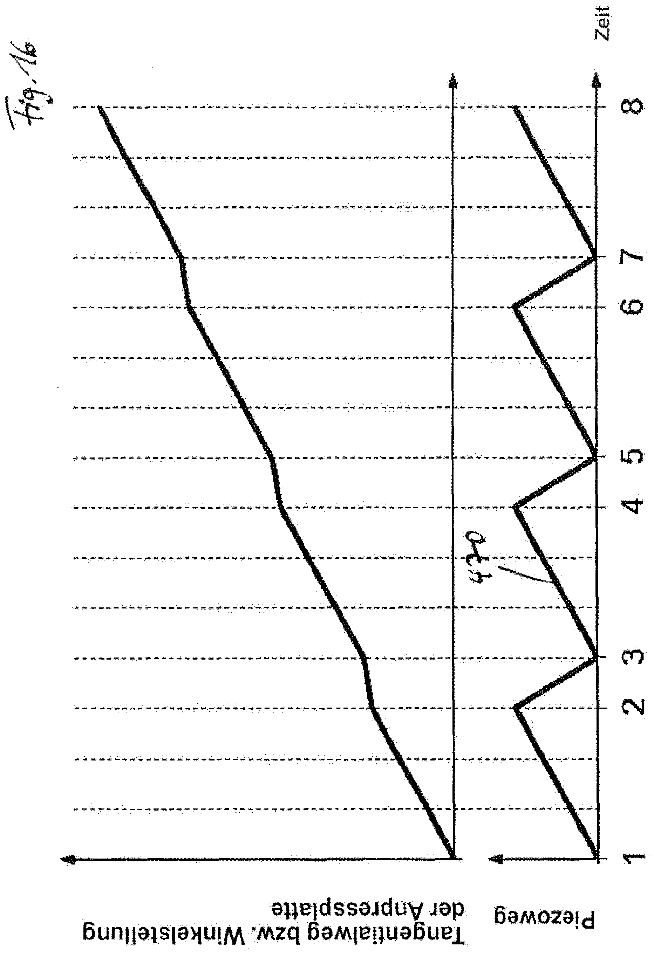

Ein weiteres Bewegungsschema mit dem die Druckplatte verdreht werden kann, zeigt das Diagramm der Figur 16. Dabei wird die Trägheit der Druckplatte ausgenutzt um die alternierende Bewegung der Piezoelemente in eine gewünschte größere Druckplattenbewegung umzuwandeln. Dieses Bewegungsschema kann auch mit einem aus drei Piezoaktuatoren bestehenden Piezoantrieb ausgeführt werden. Auch kann mit diesem Bewegungsschema eine Druckplatte mit nur einem Piezoaktuator angetrieben werden. Verwendet man mehrere Aktuatoren können diese wahlweise synchron oder phasenversetzt betrieben werden.

Das Wirkprinzip gemäß der Ansteuerung nach Figur 16 besteht darin, dass der Piezoaktuator viele kleine Bewegungen ausführt, bei dem er sich ausdehnt und zusammenzieht, um die Druckplatte anzutreiben. Dabei wird allerdings die Bewegung in einer Richtung deutlich schneller ausgeführt, als die andere. Bei der schnellen Bewegung ist die Beschleunigung so hoch, dass die Druckplatte durch ihre Trägheit dem Anlageelement als Reibelement des Aktuators nicht folgen kann. Dadurch rutscht das Anlageelement auf der Kontaktfläche der Druckplatte entlang. Bei der anderen Bewegungsrichtung wird die Bewegungsgeschwindigkeit des Piezoelements an die Bewegung des Druckplatte angepasst, damit nur so viel Kraft vom Aktuator auf die Kontaktfläche der Druckplatte übertragen wird, dass kein Gleiten an der Reibstelle auftritt. Dadurch kann der Piezoaktuator die Druckplatte tangential verdrehen. Dies ist in Figur 16 dadurch zu erkennen, dass die Linie 470 mit dem Piezoweg über der Schrittfolge bei einer Bewegungsrichtung die dreifache Zeit benötigt als für die andere Bewegungsrichtung. Beim Verdrehen der Druckplatte verfährt der Piezoaktuator langsam, während er beim Rückgleiten die dreifache Geschwindigkeit hat, um ein Verdrehen der Druckplatte zu verhindern.

Eine weitere Möglichkeit besteht darin, auch in Antriebsrichtung zumindest zeitweise Schlupf zwischen dem Aktuator und der Druckplatte zuzulassen. Dabei ist die Schlupfgeschwindigkeit aber geringer zu halten, als in der Gegenrichtung. Dadurch wird die Schlupfphase in Antriebsrichtung deutlich länger dauern, als in Gegenrichtung, wodurch bei näherungsweise gleicher Reibkraft in der Antriebsrichtung deutlich mehr Energie auf die Druckplatte übertragen wird.

Zur Anbindung der Piezoaktuatoren an die Tragelemente stellen gelenkige Befestigungselemente als Biegegelenke eine Lösung dar, wie sie beispielsweise in den Abbildungen 5 und 6 dargestellt sind. Eine weitere Lösungsmöglichkeit sind vorgespannte Lagerstellen, damit auch über die Lebensdauer des Aktuators Spiel möglichst ausgeschlossen wird.

Die Vorspannung der Piezoelemente kann auch zum Vorspannen der Anbindungsgelenke verwendet werden. Bei einer vorteilhaften Ausführungsform liegen die Piezoelemente und die Anbindungsgelenke im Kraftfluss der Vorspannfeder.

Damit bei drehender Kupplung die Fliehkraft des Aktuators die Kontaktkraft zwischen dem Aktuator und der Druckplatte nicht allzu sehr beeinflusst, ist der Aktuator nicht zu schwer ausgeführt oder es kann alternativ auch ein Fliehkraftausgleich vorgenommen werden. Ein solcher Fliehkraftausgleich kann beispielsweise durch ein Fliehgewicht realisiert werden, das beispielsweise direkt oder indirekt über eine Umlenkung auf den Aktuator wirkt. Eine einfache Ausführungsform besteht darin, das Gehäuse des Aktuators über das gelenkige Befestigungselement hinaus zu verlängern und dort ein Gewicht an der Gehäuseverlängerung zu befestigen oder das Gehäuse zu einem Gewicht auszubilden.

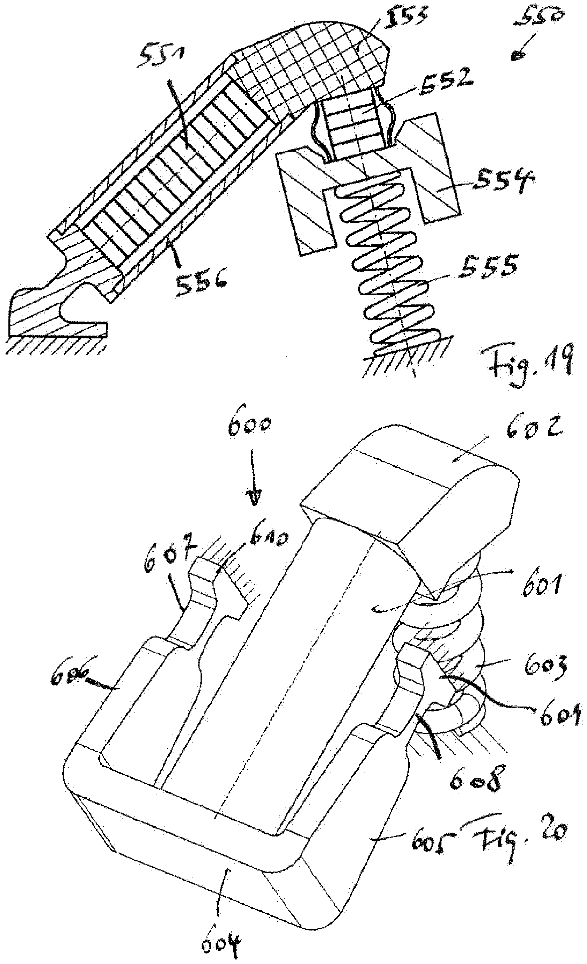

Eine weitere Ausführungsform besteht darin, das gelenkige Befestigungselement seitlich neben den Aktuator zu legen und dort so anzuordnen, dass die Biege- oder Bewegungsachse des Gelenks in etwa durch den Schwerpunkt des Piezoaktuators verläuft und im Idealfall auch die Kraftflussrichtung des Piezoelementes schneidet. Dadurch kann das Gelenk weiterhin die radialen Verlagerungen der Druckplattenkontaktflächen ausgleichen und gleichzeitig die Abstützkräfte und die Fliehkraft aufnehmen. Bei dieser Ausführungsform ist es besonders sinnvoll, wenn jeden Aktuator mit zwei Gelenkstellen anzubinden, die eine gemeinsame Biege- oder Bewegungsachse bilden. Die Figur 20 zeigt eine solche Gestaltung, bei welcher der Aktuator 600 mit seinem Gehäuse 601, seinem Anlageelement 602 und seinem Kraftspeicher 603 ähnlich der Gestaltung der Figur 5 ausgebildet ist. Allerdings ist das gelenkige Befestigungselement 604 gabelähnlich mit zwei Armen 605, 606 ausgebildet, die in Richtung auf das Anlageelement 602 vorstehen. An den Armen 605, 606 sind Gelenkelemente 607, 608 angeordnet, welche die Befestigungselemente 609, 610 tragen, mittels welchen der Aktuator an dem Tragelement befestigt werden kann.

Eine weitere Möglichkeit die Fliehkraft auszugleichen besteht darin, ein Gewicht mit einer Art Koppelgetriebe, das die Umlenkung und die Anbindung realisiert, mit dem Piezoaktuator zu verbinden.

Wenn das Anbindungsgelenk nicht genau in derselben Ebene liegt, wie die Reibkräfte zwischen der Druckplatte und dem Anlageelement des Aktuators, tritt ein Selbstverstärkungs- oder Selbstabschwächungseffekt ein. Dadurch wird die Kontaktkraft zwischen dem Anlageelement und der Druckplatten-Kontaktfläche beeinflusst.

Der Kraftspeicher als Anpressfeder kann vorteilhaft so ausgelegt werden, dass sie für die Kraftübertragungsrichtung in der ein Selbstabschwächungseffekt auftritt, ausreichend stark dimensioniert ist und man den Selbstverstärkungseffekt in der anderen Kraftrichtung nutzt, um einen höheren Sicherheitsfaktor für die Funktion des Piezoantriebs zu erzielen.

Eine weitere Möglichkeit, um mit dem unterschiedlichen Verhalten des Piezoantriebs umzugehen ist, den Rampenwinkel zwischen der Druckplatte und dem Kupplungsdeckel so anzupassen, dass in einer Druckplattendrehrichtung größere Drehkräfte des Piezoantriebs erforderlich sind, als in der anderen. So dass man die Eigenschaften des Piezoantriebs und der Kupplung aufeinander abstimmt.

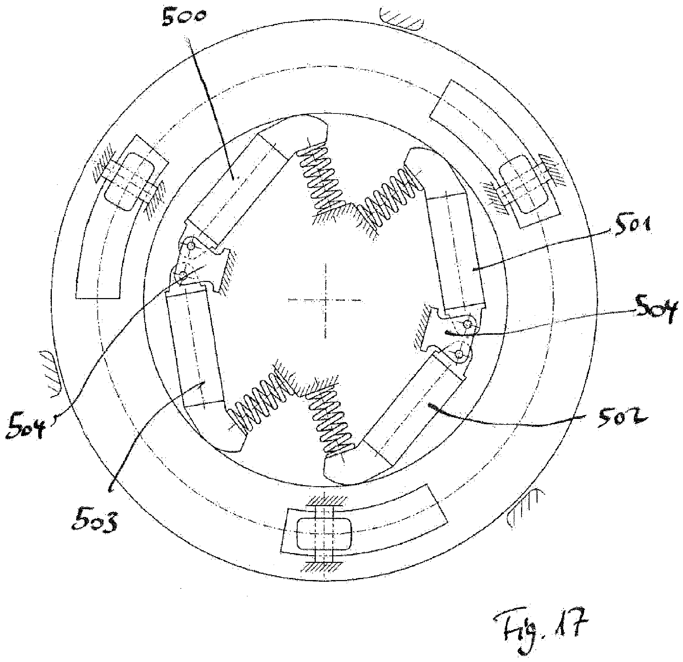

Noch eine andere Möglichkeit zeigt das Ausführungsbeispiel der Figur 17. Dabei ist der Piezoantrieb mit einer geraden Zahl an Piezoaktuatoren 500, 501, 502, 503 bestückt. Die Aktuatoren sind dabei jeweils abwechselnd orientiert, so dass die gelenkige Anbindung mit einem Gelenkelement 504 erfolgt und damit jeweils zwei Aktuatoren angebunden sind. Dadurch tritt bei jeder Drehrichtung immer an einigen Aktuatoren der Selbstverstärkungseffekt und an anderen der Selbstabschwächungseffekt auf, so dass der komplette Piezoantrieb in beiden Drehrichtungen die gleichen Eigenschaften hat. Bei Piezoantrieben mit ungerader Anzahl an Piezoaktuatoren kann man zumindest einige Aktuatoren in die andere Richtung orientieren und somit eine Teilkompensation erreichen.

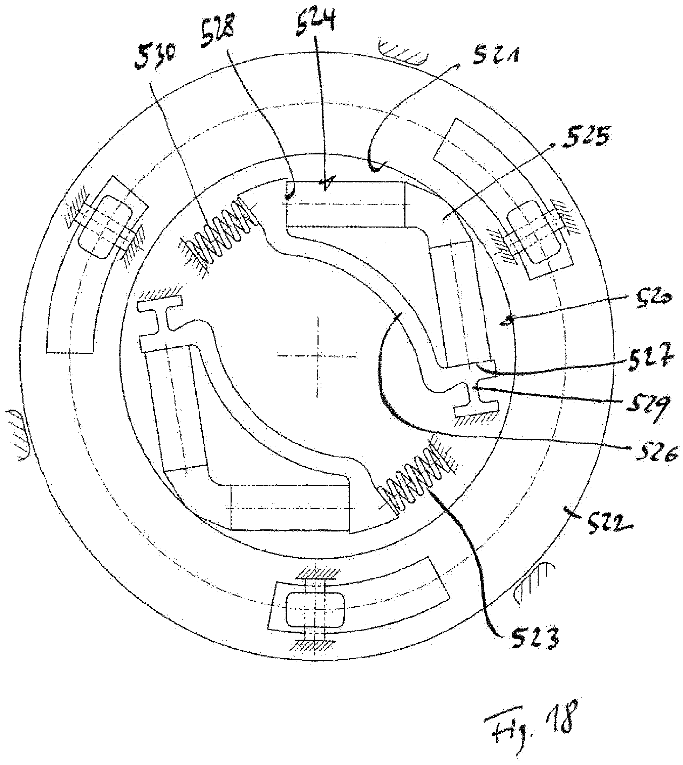

Die Figur 18 zeigt ein Ausführungsbeispiel, bei welchem die Anpresskraft von dem Piezoelement 520 auf die Kontaktfläche 521 der Druckplatte 522 beeinflusst werden kann. Die Kontaktkraft wird beispielsweise durch die Anpressfeder 530, die Fliehkraft, die Kinematik des Antriebes und/oder die erforderliche Antriebskraft bestimmt. Für das Funktionsprinzip der kleinen Antriebsschritte ist es vorteilhaft, wenn während des Arbeitshubs des Piezoaktuators eine hohe Kontaktkraft herrscht, um die Druckplatte sicher anzutreiben zu können, während beim Zurücksetzen des Aktuators die Reibkraft abgesenkt werden könnte, da sich die Druckplatte dabei möglichst nicht bewegen sollte.

Die Figur 18 zeigt ein Ausführungsbeispiel, bei welchem die Anpresskraft von den Piezoelementen 520 gezielt beeinflusst werden kann. Dabei sind zwei Piezoelemente 520, 524 V-förmig angeordnet, die mit einem gemeinsamen Anlageelement 525 als Reibelement direkt oder indirekt verbunden sind. Die beiden Piezoelemente werden von einem Tragelement 526 getragen, wobei sie sich an gegenüberliegenden Flächen 527, 528 abstützen, die hier in einem Winkel von 90° zueinander stehen. Das Tragelement 526 ist mittels des Gelenks 529 gelenkig mit dem Tragelement der Druckplatte verbunden, wobei sich der Kraftspeicher 530 am gegenüberliegenden Ende des Tragelements abstützt.

Die Piezoelemente können das Anlageelement 525 in zwei Raumrichtungen verschieben. Dadurch ist es möglich das Anlageelement 525 als Reibelement beispielsweise unter Ausnutzung der Bauteilträgheit während des Arbeitshubs stärker an die Druckplatte angepresst wird, als beim Zurücksetzen des Anlageelements 525. Das Anlageelement beschreibt dabei bezogen auf den Aktuator eine näherungsweise elliptische Bahn. Insgesamt ist dadurch auch eine Verschiebung der Druckplatte 522 in zwei Raumrichtungen möglich.

Eine weitere Variante ist in Figur 19 gezeigt. Dabei ist der Piezoaktuator 550 mit einem ersten Piezoelement 551 versehen, wie es auch bereits in Figur 5 zu erkennen ist. Auch wurde der Aktuator 550 mit einem weiteren Piezoelement 552 versehen, das zwischen dem Anlageelement 553 und einer Zusatzmasse 554 angeordnet ist. Die Zusatzmasse 554 ist zwischen dem zweiten Piezoelement und dem Kraftspeicher 555 angeordnet. Durch schnelle Längenänderungen des neu hinzugekommenen Piezoelements 552 wird die Trägheit der Zusatzmasse 554 ausgenutzt, um die Kontaktkraft zur Druckplatte hin kurzzeitig zu verändern. Wenn die Ansteuerung der beiden Piezoelemente 551, 552 aufeinander abgestimmt ist, kann die Kontaktkraft während des Arbeitshubs erhöht und während dem Zurücksetzen abgesenkt werden.

Alternativ dazu kann die Zusatzmasse und das zusätzliche Piezoelement auch parallel oder in einem anderen Winkel zur Anpressfeder orientiert werden.

Das zusätzliche Piezoelement 552 kann beispielsweise auch am Gehäuse 556 des anderen Piezoelementes 551 angebunden sein, oder mit einer separaten Anpressfeder angedrückt werden.

Bei allen oben beschriebenen Piezoantrieben können die Piezoaktuatoren zusätzlich oder alternativ zu dem Verdrehen der Druckplatte auch noch Sekundäraufgaben erfüllen.

Eine Möglichkeit besteht darin, die Druckplatte gezielt stoßweise oder schwingend, beispielsweise radial oder tangential, zu bewegen, um den Reibwert in dem Rampenmechanismus auf der Rückseite der Druckplatte oder den Reibwert zwischen der Kupplungsscheibe und der Druckplatte zu verändern. Diese Reibwertabsenkung erfolgt durch den Wechsel vom Haftreibwert zu Gleitreibwert beim Übergang von der Haft zur Gleitreibung bzw. umgekehrt. Durch stoßweise oder schwingende Bewegungen können die Piezoaktuatoren auch den Reibkontakt zwischen ihrem Anlageelement als Reibelement und der Druckplatte oder den Reibkontakt eines anderen Aktuators beeinflussen.

Darüber hinaus können die Piezoelemente so angeregt werden, dass sie selbst, der Piezoaktuator, der Piezoantriebsmechanismus und/oder die Kupplung in Resonanz oder resonanzähnliche Schwingungen versetzt werden, um beispielsweise die Reibverhältnisse zu verändern oder die Schrittweite bzw. die Geschwindigkeit des Antriebs zu erhöhen.

In den Piezoaktuatoren können auch Piezoelemente mit unterschiedlicher Bewegungsrichtung kombiniert werden, um beispielsweise Schwingungen zu erzeugen, die Kontaktkraft zu modellieren oder Mikrobewegungen zu erzeugen, die senkrecht zur Hauptbewegungsrichtung orientiert sind und den Reibwert absenken. Dazu können auch unterschiedliche Piezoelementtypen kombiniert werde, wie Axial- und Scherelemente.

Da Piezoelemente sowohl als Aktuatoren als auch als Sensoren nutzbar sind, können die in die Kupplung integrierten Piezoelemente, auch Informationen an die Kupplungssteuerung weiterleiten. Die Piezoelemente können beispielsweise die Kraft erfassen, die die Druckplatte auf sie ausübt. Damit kann beispielsweise das Ansteuerschema der Piezoelemente an die reale Belastung und Kraftrichtung angepasst werden, um dem Piezoantrieb situationsabhängig betreiben zu können.

Auch können die Piezoelemente zur Ermittlung des in der Kupplung übertragenen Motormoments und zum Erfassen von Schwingungen oder Rupfen genutzt werden. Dabei können die Piezoelemente als alleinige Sensoren genutzt werden oder es können ihre Signale zusammen mit anderen Messgrößen von einer Steuereinheit ausgewertet werden.

Wenn mehrere Piezoaktuatoren am Umfang der Druckplatte der Kupplung angeordnet sind, können diese auch zum Zentrieren der Druckplatte genutzt werden. Beispielsweise können einzelne Piezoaktuatoren versetzt werden oder beim Drehen der Druckplatte einzelne Aktuatoren etwas weiter oder kürzer verschoben werden als die andern, damit durch diese Abweichung die Druckplatte gezielt radial versetzt und so zentriert wird.

Um den Piezoaktuator und damit die Kupplung bzw. deren Einrückzustand steuern zu können, ist die Verwendung eines Wegsensors an der Druckplatte sinnvoll, welcher den Axialhub und/oder den Verdrehwinkel bzw. den Verdrehweg erfasst.

Da der Piezoantrieb in die Kupplung integriert ist und somit zu dem rotierenden Kupplungssystems gehört, ist eine Übertragungseinheit erforderlich, welche die Energie und die Steuersignale vom stehenden Getriebegehäuse auf die drehende Kupplung überträgt.

Wenn die Piezoelemente als Sensoren genutzt werden oder andere Sensoren bzw. Überwachungselemente in die Kupplung integriert sind, müssen zusätzlich auch Signale vom drehenden auf das stehende System übertragen werden.

Für diese Signalübertragung kommen verschiedene Möglichkeiten der Übertragung zum Einsatz, wie beispielsweise Schleifringe oder eine induktive Drehübertragung. Insbesondere die induktive Drehübertragung ist für diese Anwendung vorteilhaft geeignet, da sie ohne verschleißbehaftete reibende Kontakte auskommt.

In den Figuren 1 und 2 ist jeweils eine solche induktive Drehübertragungseinheit 32, 115 angeordnet. Vorteilhaft ist die Anordnung der Drehübertragungseinheit 32, 115 zwischen der Kupplung 1 und dem Getriebe 33, 116 da dort oft der benötigte Bauraum zu Verfügung steht und die Übertragungseinheit auf kleinem Durchmesser realisiert werden kann.

Die Drehübertragungseinheit 32, 115 kann aber auch vom Durchmesser deutlich größer werden, als ein klassisches Ausrücklager und entsprechend zwischen dem Kupplungsdeckel und dem Getriebe angeordnet sein.

Auch ist eine Anordnung radial außerhalb der Kupplung auf großem Durchmesser möglich. Positioniert man die Drehübertragungseinheit zwischen dem Motor und dem Schwungrad, bietet diese Stelle die Möglichkeit Drehübertragungseinheiten mit großem oder relativ kleinem Durchmesser unterzubringen.

Den Spalt zwischen den beiden Hälften der Drehübertragungseinheit 32, 115 kann man senkrecht oder konzentrisch zur Kupplungsdrehachse anordnen. Bei einer Spaltausrichtung senkrecht zur Drehachse der Kupplung, kann das Spaltmaß bei der Montage besonders leicht mittels einer Ausgleichsscheibe eingestellt werden.

Da Kupplungen außer reinen axialen und radialen Bewegungen auch Taumel- und Kippbewegungen ausführen, kann eine kalottenförmige Spaltkontur vorteilhaft sein.

Die Piezoantriebe mittels Piezoaktuatoren wird in den vorliegenden Unterlagen für den Einsatz in einer Kupplung nahe der Druckplatte beschrieben. Die Anwendungsmöglichkeiten des Piezoantriebs mittels Piezoaktuatoren sind aber nicht auf diese Anwendungsart begrenzt. Grundsätzlich können mittels solcher Piezoaktuatoren auch andere Körper angetrieben werden. Dabei ist es insbesondere vorteilhaft, wenn dieser Körper eine zumindest teilweise runde Innenfläche als Kontaktfläche aufweist. Dann ist das Antriebskonzept nahezu unverändert übertragbar.

Alternativ sind auch Linearantriebe realisierbar, wenn die Piezoaktuatoren nebeneinander auf eine gerade Kontaktfläche wirken. Körper mit zylindrischer oder näherungsweise zylindrischer Außenfläche können ebenfalls angetrieben werden, wenn die Piezoaktuatoren auf dem Umfang verteilt um ihn herum angeordnet werden. Somit kann der Piezoantrieb auch als Alternative zum Elektromotor eingesetzt werden. In Fahrzeugen bieten sich dafür besonders Kupplungsbetätigungssysteme außerhalb der Kupplung oder auch Getriebebetätigungsvorrichtungen an. Es sind aber auch andere Anwendungsfälle für den Einsatz solcher Piezoaktuatoren geeignet, wie beispielsweise Niveauregulierungseinheiten im Fahrwerk, ein Aktuator für Differenzialsperren, für variable Nebenabtriebe, für Sitzversteller, für Fensterheber, für Scheibenwischer, für Schiebedächer, für Verdecköffnungsmechanismen oder für die Betätigung von Abdeckungen und Klappen (u. a. Kofferraumdeckel, Tankdeckel).

### Bezugszeichenliste

- 1: Doppelkupplung, Kupplung
- 2: Teilkupplung
- 3: Teilkupplung
- 4: Betätigungsvorrichtung, Aktuator
- 5: Betätigungsvorrichtung, Aktuator
- 6: Kurbelwelle
- 7: Dämpfer
- 8: Kupplungsdeckel
- 9: Nietverbindung
- 10: Gegendruckplatte
- 11: Kupplungsdeckel
- 12: Druckplatte
- 13: Druckplatte
- 14: Wälzelement
- 15: Wälzelement
- 16: Rampenbereich
- 17: Rampenbereich
- 18: Kupplungsscheibe
- 19: Kupplungsscheibe
- 20: Verzahnung
- 21: Verzahnung
- 22: Getriebeeingangswelle
- 23: Getriebeeingangswelle
- 24: Tragelement
- 25: Tragelement
- 26: Bereich
- 27: Bereich
- 28: Bereich
- 29: Bereich
- 30: Kontaktfläche
- 31: Kontaktfläche
- 32: Drehübertragungseinheit, Übertragungseinheit
- 33: Getriebe
- 101: Reibungskupplung
- 102: Betätigungsvorrichtung, Aktuator
- 103: Schwungrad
- 104: Kupplungsdeckel
- 105: Befestigungsmittel
- 106: Druckplatte
- 107: Wälzelement
- 108: Drehachse
- 109: Rampenvorrichtung
- 110: Kupplungsscheibe
- 111: Verzahnung
- 112: Getriebeeingangswelle
- 113: Tragelement
- 114: Kontaktfläche
- 115: Übertragungseinheit
- 116: Getriebe
- 200: Druckplatte
- 201: Gegendruckplatte, Druckplatte
- 202: Belag, Reibbelag
- 203: Rampenvorrichtung
- 204: Rolle
- 250: Piezoaktuator
- 251: Piezoelement
- 252: Endstück, Befestigungselement
- 253: Endstück, Anlageelement
- 254: Aktuatorgehäuse
- 300: Piezoaktuator, Stellung, Aktuator
- 300': Position
- 300": Stellung
- 301: Piezoaktuator, Aktuator
- 301': Position, Stellung
- 301": Position, Stellung
- 302: Piezoaktuator, Aktuator
- 302': Position, Stellung
- 302": Position, Stellung
- 303: Druckplatte
- 304: Anlageelement
- 305: Anlageelement
- 306: Anlageelement
- 307: Kraftspeicher
- 308: Kraftspeicher
- 309: Kraftspeicher
- 310: Pfeile
- 311: Pfeile
- 350: Gegendruckplatte
- 351: Reibbelag
- 352: Rampenvorrichtung
- 353: Wälzelement
- 400: Linie
- 401: Linie
- 402: Linie
- 450: Kurve
- 470: Linie
- 500: Piezoaktuator
- 501: Piezoaktuator
- 502: Piezoaktuator
- 503: Piezoaktuator
- 504: Gelenkelement
- 520: Piezoelement
- 521: Kontaktfläche
- 522: Druckplatte
- 523: Anpressfeder
- 524: Piezoelement
- 525: Anlageelement
- 526: Tragelement
- 527: Fläche
- 528: Fläche
- 529: Gelenk
- 530: Kraftspeicher
- 550: Piezoaktuator, Aktuator
- 551: Piezoelement
- 552: Piezoelement
- 553: Anlageelement
- 554: Zusatzmasse
- 555: Kraftspeicher
- 556: Gehäuse
- 600: Aktuator
- 601: Gehäuse
- 602: Anlageelement
- 603: Kraftspeicher
- 604: Befestigungselement
- 605: Arm
- 606: Arm
- 607: Gelenkelement
- 608: Gelenkelement
- 609: Befestigungselement
- 610: Befestigungselement

## Patentansprüche

1. Reibungskupplung (1) mit einer Betätigungsvorrichtung (4,5), die Reibungskupplung (1) weist eine Druckplatte (12,13,200,201), eine Gegendruckplatte (10,201) und einen Kupplungsdeckel (8,11,104) auf, wobei zwischen Druckplatte (12,13) und Gegendruckplatte (10) eine Kupplungsscheibe (18,19) aufnehmbar ist, wobei die Druckplatte (12,13,200,201) ringförmig ausgebildet ist, die Betätigungsvorrichtung (4,5) zwischen der Druckplatte (12,13,200,201) und dem Kupplungsdeckel (8,11) eine Rampenvorrichtung (16,17,109,203,352) aufweist, zur axialen Verlagerung der Druckplatte (12,13,200,201) und die Betätigungsvorrichtung (4,5) weiterhin einen Aktuator (4,5,102,250, 300,301,302,500,501,502,503,550,600) aufweist zur Verdrehung der Druckplatte (12,13,200,201) in Umfangsrichtung gegenüber dem Kupplungsdeckel (8,11,104), **dadurch gekennzeichnet, dass** der Kupplungsdeckel (8,11,104) ein Tragelement (24,25,113,526) aufweist, so dass der Aktuator (4,5,102,250,300,301,302,500,501,502,503, 550,600) sich radial innen oder außen an dem Tragelement (24,25,113,526) abstützt und sich radial außen oder innen an der Druckplatte (12,13,200,201) abstützt.

2. Reibungskupplung nach Anspruch 1, **dadurch gekennzeichnet, dass** der Aktuator (4,5,102,250,300,301,302,500,501,502,503,550,600) zumindest ein Längenausdehnungselement aufweist, welches zumindest ein Piezoelement (251,551,552) oder einen Stapel von Piezoelementen (251,551,552) aufweist.

3. Reibungskupplung nach Anspruch 1 oder 2, **dadurch gekennzeichnet, dass** der Aktuator (4,5,102,250, 300,301,302,500,501,502,503,550,600) weiterhin ein gelenkiges Befestigungselement (252), ein Anlageelement (253,304,305,306,525,553,602) und einen Kraftspeicher (307,308,309,530,555,603) aufweist, wobei das Befestigungselement (252) am Tragelement (24,25,113,526) befestigt ist, der Kraftspeicher (307,308,309,530,555,603) zwischen dem Anlageelement (253,304,305,306,525,553,602) und dem Tragelement (24,25,113,526) verspannt aufgenommen ist und das Längenausdehnungselement zwischen dem Befestigungselement (252) und dem Anlageelement (253,304,305,306,525,553,602) angeordnet ist, wobei sich das Anlageelement (253,304,305,306,525,553,602) an der Druckplatte (12,13,200,201) kraftschlüssig abstützt.

4. Reibungskupplung nach einem der vorhergehenden Ansprüche, **dadurch gekennzeichnet, dass** sich das Anlageelement (253,304,305,306,525,553,602) an einem radial innen liegenden Rand oder an einem radial außen liegenden Rand der Druckplatte (12,13,200,201) abstützt.

5. Reibungskupplung nach einem der vorhergehenden Ansprüche, dass die Druckplatte (12,13,200,201) einen axialen An- oder Absatz aufweist, wobei sich das Anlageelement (253,304,305,306,525,553,602) an einem radial innen liegenden Rand oder einem radial außen liegenden Rand des Ab- oder Ansatzes der Druckplatte (12,13,200,201) abstützt.

6. Reibungskupplung nach zumindest einem der vorhergehenden Ansprüche, **dadurch gekennzeichnet, dass** die Betätigungsvorrichtung (4,5) eine Mehrzahl von Rampenvorrichtungen (16,17,109,203,352) und/oder eine Mehrzahl von Aktuatoren (4,5,102,250, 300,301,302,500,501,502,503,550,600) aufweist.

7. Reibungskupplung nach einem der vorhergehenden Ansprüche, **dadurch gekennzeichnet, dass** die Rampenvorrichtung (16,17,109,203,352) wenigstens eine Auflauframpe und ein sich daran abstützendes Wälzelement (107) aufweist, wobei die Rampenvorrichtung (16,17,109,203,352) zwischen der Druckplatte (12,13,200,201) und dem Kupplungsdeckel (8,11,104) angeordnet ist, wobei die Auflauframpe an der Druckplatte (12,13,200,201) und/oder am Kupplungsdeckel (8,11,104) angebracht ist und das Wälzelement (107) entweder an dem Kupplungsdeckel (8,11,104), an der Druckplatte (12,13,200,201) oder zwischen einer druckplattenseitigen und einer kupplungsdeckelseitigen Auflauframpe verdrehbar gehalten ist.

8. Reibungskupplung nach einem der vorhergehenden Ansprüche, **dadurch gekennzeichnet, dass** die Ausrichtung der Aktuatoren (4,5,102,250, 300,301,302,500,501,502,503,550,600) in Umfangsrichtung gleich ist oder zumindest einzelne Aktuatoren (4,5,102,250, 300,301,302,500,501,502,503,550,600) in Umfangsrichtung in entgegen gesetzter Richtung ausgerichtet sind.

9. Reibungskupplung nach zumindest einem der vorhergehenden Ansprüche, **dadurch gekennzeichnet, dass** zwei Aktuatoren (500,503,501,502) mittels eines gemeinsamen Befestigungselements (504) befestigt sind.

10. Reibungskupplung nach zumindest einem der vorhergehenden Ansprüche, **dadurch gekennzeichnet, dass** zwei Aktuatoren (520,524) mittels eines gemeinsamen Anlageelements (525) an der Druckplatte (12,13,200,201) anliegen und/oder mittels eines gemeinsamen Kraftspeichers (523,530) beaufschlagt sind.

11. Verfahren zur Betätigung einer Reibungskupplung (1) mittels einer Betätigungsvorrichtung (4,5), die Reibungskupplung (1) weist eine Druckplatte (12,13,200,201), eine Gegendruckplatte (10,201) und einen Kupplungsdeckel (8,11,104) auf, wobei zwischen Druckplatte (12,13,200,201) und Gegendruckplatte (10,201) eine Kupplungsscheibe (18,19) aufnehmbar ist, wobei die Druckplatte (12,13,200,201) ringförmig ausgebildet ist, die Betätigungsvorrichtung zwischen der Druckplatte (12,13,200,201) und dem Kupplungsdeckel (8,11,104) eine Anzahl von Rampenvorrichtungen (16,17,109,203,352) aufweist, zur axialen Verlagerung der Druckplatte (12,13,200,201) und die Betätigungsvorrichtung (4,5) weiterhin eine Anzahl von Aktuatoren (4,5,102,250, 300,301,302,500,501,502,503,550,600) aufweist zur Verdrehung der Druckplatte (12,13,200,201) in Umfangsrichtung gegenüber dem Kupplungsdeckel (8,11,104), **dadurch gekennzeichnet, dass** die Aktuatoren (4,5,102,250, 300,301,302,500,501,502,503,550,600) in Antriebsrichtung gleichzeitig betätigt werden und in Gegenrichtung zum Zurücksetzen zumindest einzelne Aktuatoren (4,5,102,250, 300,301,302,500,501,502,503,550,600) versetzt zueinander betätigt werden.

12. Verfahren zur Betätigung einer Reibungskupplung (1) mittels einer Betätigungsvorrichtung (4,5), die Reibungskupplung (1) weist eine Druckplatte (12,13,200,201), eine Gegendruckplatte (10,201) und einen Kupplungsdeckel (8,11,104) auf, wobei zwischen Druckplatte (12,13,200,201) und Gegendruckplatte (10,201) eine Kupplungsscheibe (18,19) aufnehmbar ist, wobei die Druckplatte (12,13,200,201) ringförmig ausgebildet ist, die Betätigungsvorrichtung (4,5) zwischen der Druckplatte (12,13,200,201) und dem Kupplungsdeckel (8,11,104) eine Anzahl von Rampenvorrichtungen (16,17,109,203,352) aufweist, zur axialen Verlagerung der Druckplatte (12,13,200,201) und die Betätigungsvorrichtung (4,5) weiterhin wenigstens einen Aktuator (4,5,102,250, 300,301,302,500,501,502,503,550,600) aufweist zur Verdrehung der Druckplatte (12,13,200,201) in Umfangsrichtung gegenüber dem Kupplungsdeckel (8,11,104), **dadurch gekennzeichnet, dass** zumindest ein Aktuator (4,5,102,250, 300,301,302,500,501,502,503,550,600) in der Antriebsrichtung langsamer bewegt wird als in der Gegenrichtung zum Zurücksetzen und bei der schnelleren Bewegung in die Gegenrichtung die Beschleunigung so hoch ist, dass die Druckplatte (12,13,200,201) durch ihre Trägheit einem Anlageelement (253,304,305,306,525,553,602) als Reibelement des Aktuators (4,5,102,250, 300,301,302,500,501,502,503,550,600) nicht folgen kann.

13. Verfahren nach Anspruch 11, **dadurch gekennzeichnet, dass** bei Anordnung von N Aktuatoren (4,5,102,250, 300,301,302,500,501,502,503,550,600) in Antriebsrichtung die Aktuatoren (4,5,102,250, 300,301,302,500,501,502,503,550,600) gleichzeitig betätigt werden und in Gegenrichtung weniger Aktuatoren (4,5,102,250, 300,301,302,500,501,502,503,550,600) der N Aktuatoren (4,5,102,250, 300,301,302,500,501,502,503,550,600) betätigt werden als unbetätigte Aktuatoren (4,5,102,250, 300,301,302,500,501,502,503,550,600) und die Aktuatoren (4,5,102,250, 300,301,302,500,501,502,503,550,600) nacheinander in Gegenrichtung betätigt werden.

14. Verfahren nach Anspruch 11, **dadurch gekennzeichnet, dass** bei Anordnung von drei Aktuatoren (4,5,102,250, 300,301,302,500,501,502,503,550,600) in Antriebsrichtung die drei Aktuatoren (4,5,102,250, 300,301,302,500,501,502,503,550,600) gleichzeitig betätigt werden und in Gegenrichtung jeweils ein Aktuator (4,5,102,250, 300,301,302,500,501,502,503,550,600) betätigt wird, während die zwei verbleibenden Aktuatoren (4,5,102,250, 300,301,302,500,501,502,503,550,600) unbetätigt sind und die Aktuatoren (4,5,102,250, 300,301,302,500,501,502,503,550,600) nacheinander in Gegenrichtung betätigt werden.

15. Verfahren nach Anspruch 13, **dadurch gekennzeichnet, dass** für die Aktuatoranzahl der unbetätigten Aktuatoren (4,5,102,250, 300,301,302,500,501,502,503,550,600) im Verhältnis zu der Aktuatorenzahl der betätigten Aktuatoren (4,5,102,250, 300,301,302,500,501,502,503,550,600) gilt: 3:1, 4:1, 3:2, 5:1, 4:2, 6:1, 5:2 oder 4:3.

## Claims

1. Friction clutch (1) having an actuating apparatus (4, 5), the friction clutch (1) having a pressure plate (12, 13, 200, 201), a counterpressure plate (10, 201) and a clutch cover (8, 11, 104), it being possible for a clutch plate (18, 19) to be received between the pressure plate (12, 13) and the counterpressure plate (10), the pressure plate (12, 13, 200, 201) being of annular configuration, the actuating apparatus (4, 5) having a ramp apparatus (16, 17, 109, 203, 352) between the pressure plate (12, 13, 200, 201) and the clutch cover (8, 11), for the axial movement of the pressure plate (12, 13, 200, 201), and the actuating apparatus (4, 5) having, furthermore, an actuator (4, 5, 102, 250, 300, 301, 302, 500, 501, 502, 503, 550, 600) for rotating the pressure plate (12, 13, 200, 201) in the circumferential direction with respect to the clutch cover (8, 11, 104), **characterized in that** the clutch cover (8, 11, 104) has a carrying element (24, 25, 113, 526), with the result that the actuator (4, 5, 102, 250, 300, 301, 302, 500, 501, 502, 503, 550, 600) is supported radially on the inside or outside on the carrying element (24, 25, 113, 526) and is supported radially on the outside or inside on the pressure plate (12, 13, 200, 201).

2. Friction clutch according to Claim 1, **characterized in that** the actuator (4, 5, 102, 250, 300, 301, 302, 500, 501, 502, 503, 550, 600) has at least one linear expansion element which has at least one piezo-electric element (251, 551, 552) or a stack of piezo-electric elements (251, 551, 552).

3. Friction clutch according to Claim 1 or 2, **characterized in that**, furthermore, the actuator (4, 5, 102, 250, 300, 301, 302, 500, 501, 502, 503, 550, 600) has an articulated fastening element (252), a bearing element (253, 304, 305, 306, 525, 553, 602) and a force accumulator (307, 308, 309, 530, 555, 603), the fastening element (252) being fastened to the carrying element (24, 25, 113, 526), the force accumulator (307, 308, 309, 530, 555, 603) being received in a braced manner between the bearing element (253, 304, 305, 306, 525, 553, 602) and the carrying element (24, 25, 113, 526), and the linear expansion element being arranged between the fastening element (252) and the bearing element (253, 304, 305, 306, 525, 553, 602), the bearing element (253, 304, 305, 306, 525, 553, 602) being supported in a non-positive manner on the pressure plate (12, 13, 200, 201).

4. Friction clutch according to one of the preceding claims, **characterized in that** the bearing element (253, 304, 305, 306, 525, 553, 602) is supported on a radially inner edge or on a radially outer edge of the pressure plate (12, 13, 200, 201).

5. Friction clutch according to one of the preceding claims, that the pressure plate (12, 13, 200, 201) has an axial projection or recess, the bearing element (253, 304, 305, 306, 525, 553, 602) being supported on a radially inner edge or a radially outer edge of the recess or projection of the pressure plate (12, 13, 200, 201).

6. Friction clutch according to at least one of the preceding claims, **characterized in that** the actuating apparatus (4, 5) has a plurality of ramp apparatuses (16, 17, 109, 203, 352) and/or a plurality of actuators (4, 5, 102, 250, 300, 301, 302, 500, 501, 502, 503, 550, 600).

7. Friction clutch according to one of the preceding claims, **characterized in that** the ramp apparatus (16, 17, 109, 203, 352) has at least one run-on ramp and a rolling element (107) which is supported thereon, the ramp apparatus (16, 17, 109, 203, 352) being arranged between the pressure plate (12, 13, 200, 201) and the clutch cover (8, 11, 104), the run-on ramp being attached on the pressure plate (12, 13, 200, 201) and/or on the clutch cover (8, 11, 104), and the rolling element (107) being held rotatably either on the clutch cover (8, 11, 104), on the pressure plate (12, 13, 200, 201) or between a pressure plate-side and a clutch cover-side run-on ramp.

8. Friction clutch according to one of the preceding claims, **characterized in that** the orientation of the actuators (4, 5, 102, 250, 300, 301, 302, 500, 501, 502, 503, 550, 600) is identical in the circumferential direction, or at least individual actuators (4, 5, 102, 250, 300, 301, 302, 500, 501, 502, 503, 550, 600) are oriented in the circumferential direction in an opposed direction.

9. Friction clutch according to at least one of the preceding claims, **characterized in that** two actuators (500, 503, 501, 502) are fastened by means of a common fastening element (504).

10. Friction clutch according to at least one of the preceding claims, **characterized in that** two actuators (520, 524) bear against the pressure plate (12, 13, 200, 201) by means of a common bearing element (525) and/or are loaded by means of a common force accumulator (523, 530).

11. Method for actuating a friction clutch (1) by means of an actuating apparatus (4, 5), the friction clutch (1) having a pressure plate (12, 13, 200, 201), a counterpressure plate (10, 201) and a clutch cover (8, 11, 104), it being possible for a clutch plate (18, 19) to be received between the pressure plate (12, 13, 200, 201) and the counterpressure plate (10, 201), the pressure plate (12, 13, 200, 201) being of annular configuration, the actuating apparatus having a number of ramp apparatuses (16, 17, 109, 203, 352) between the pressure plate (12, 13, 200, 201) and the clutch cover (8, 11, 104), for the axial movement of the pressure plate (12, 13, 200, 201), and the actuating apparatus (4, 5) having, furthermore, a number of actuators (4, 5, 102, 250, 300, 301, 302, 500, 501, 502, 503, 550, 600) for rotating the pressure plate (12, 13, 200, 201) in the circumferential direction with respect to the clutch cover (8, 11, 104), **characterized in that** the actuators (4, 5, 102, 250, 300, 301, 302, 500, 501, 502, 503, 550, 600) are actuated at the same time in the drive direction, and at least individual actuators (4, 5, 102, 250, 300, 301, 302, 500, 501, 502, 503, 550, 600) are actuated in a staggered manner with respect to one another in the opposite direction for resetting purposes.

12. Method for actuating a friction clutch (1) by means of an actuating apparatus (4, 5), the friction clutch (1) having a pressure plate (12, 13, 200, 201), a counterpressure plate (10, 201) and a clutch cover (8, 11, 104), it being possible for a clutch plate (18, 19) to be received between the pressure plate (12, 13, 200, 201) and the counterpressure plate (10, 201), the pressure plate (12, 13, 200, 201) being of annular configuration, the actuating apparatus (4, 5) having a number of ramp apparatuses (16, 17, 109, 203, 352) between the pressure plate (12, 13, 200, 201) and the clutch cover (8, 11, 104), for the axial movement of the pressure plate (12, 13, 200, 201), and the actuating apparatus (4, 5) having, furthermore, at least one actuator (4, 5, 102, 250, 300, 301, 302, 500, 501, 502, 503, 550, 600) for rotating the pressure plate (12, 13, 200, 201) in the circumferential direction with respect to the clutch cover (8, 11, 104), **characterized in that** at least one actuator (4, 5, 102, 250, 300, 301, 302, 500, 501, 502, 503, 550, 600) is moved more slowly in the drive direction than in the opposite direction for resetting purposes, and the acceleration during the more rapid movement in the opposite direction is so high that, as a result of its inertia, the pressure plate (12, 13, 200, 201) cannot follow a bearing element (253, 304, 305, 306, 525, 553, 602) as frictional element of the actuator (4, 5, 102, 250, 300, 301, 302, 500, 501, 502, 503, 550, 600).

13. Method according to Claim 11, **characterized in that**, in the case of an arrangement of N actuators (4, 5, 102, 250, 300, 301, 302, 500, 501, 502, 503, 550, 600), in the drive direction the actuators (4, 5, 102, 250, 300, 301, 302, 500, 501, 502, 503, 550, 600) are actuated at the same time, and, in the opposite direction, fewer actuators (4, 5, 102, 250, 300, 301, 302, 500, 501, 502, 503, 550, 600) of the N actuators (4, 5, 102, 250, 300, 301, 302, 500, 501, 502, 503, 550, 600) are actuated than non-actuated actuators (4, 5, 102, 250, 300, 301, 302, 500, 501, 502, 503, 550, 600), and the actuators (4, 5, 102, 250, 300, 301, 302, 500, 501, 502, 503, 550, 600) are actuated one after another in the opposite direction.

14. Method according to Claim 11, **characterized in that**, in the case of an arrangement of three actuators (4, 5, 102, 250, 300, 301, 302, 500, 501, 502, 503, 550, 600), in the drive direction the three actuators (4, 5, 102, 250, 300, 301, 302, 500, 501, 502, 503, 550, 600) are actuated at the same time, and in each case one actuator (4, 5, 102, 250, 300, 301, 302, 500, 501, 502, 503, 550, 600) is actuated in the opposite direction, while the two remaining actuators (4, 5, 102, 250, 300, 301, 302, 500, 501, 502, 503, 550, 600) are non-actuated and the actuators (4, 5, 102, 250, 300, 301, 302, 500, 501, 502, 503, 550, 600) are actuated one after another in the opposite direction.

15. Method according to Claim 13, **characterized in that** the ratio of the number of actuators of the non-actuated actuators (4, 5, 102, 250, 300, 301, 302, 500, 501, 502, 503, 550, 600) to the number of actuators of the actuated actuators (4, 5, 102, 250, 300, 301, 302, 500, 501, 502, 503, 550, 600) is: 3:1, 4:1, 3:2, 5:1, 4:2, 6:1, 5:2 or 4:3.

## Revendications

1. Embrayage à friction (1) avec un dispositif d'actionnement (4, 5), l'embrayage à friction (1) présente un plateau de pression (12, 13, 200, 201), un contre-plateau de pression (10, 201) et un couvercle d'embrayage (8, 11, 104), dans lequel un disque d'embrayage (18, 19) peut être logé entre le plateau de pression (12, 13) et le contre-plateau de pression (10), dans lequel le plateau de pression (12, 13, 200, 201) est de forme annulaire, le dispositif d'actionnement (4, 5) présente entre le plateau de pression (12, 13, 200, 201) et le couvercle d'embrayage (8, 11) un dispositif de rampe (16, 17, 109, 203, 352) pour le déplacement axial du plateau de pression (12, 13, 200, 201) et le dispositif d'actionnement (4, 5) présente en outre un actionneur (4, 5, 102, 250, 300, 301, 302, 500, 501, 502, 503, 550, 600) pour la rotation du plateau de pression (12, 13, 200, 201) en direction périphérique par rapport au couvercle d'embrayage (8, 11, 104), **caractérisé en ce que** le couvercle d'embrayage (8, 11, 104) présente un élément de support (24, 25, 113, 526), de telle manière que l'actionneur (4, 5, 102, 250, 300, 301, 302, 500, 501, 502, 503, 550, 600) s'appuie radialement intérieurement ou extérieurement sur l'élément de support (24, 25, 113, 526) et s'appuie radialement extérieurement ou intérieurement sur le plateau de pression (12, 13, 200, 201).

2. Embrayage à friction selon la revendication 1, **caractérisé en ce que** l'actionneur (4, 5, 102, 250, 300, 301, 302, 500, 501, 502, 503, 550, 600) présente au moins un élément à dilatation longitudinale, qui présente au moins un élément piézoélectrique (251, 551, 552) ou un empilement d'éléments piézoélectriques (251, 551, 552).

3. Embrayage à friction selon la revendication 1 ou 2, **caractérisé en ce que** l'actionneur (4, 5, 102, 250, 300, 301, 302, 500, 501, 502, 503, 550, 600) présente en outre un élément de fixation articulé (252), un élément d'appui (253, 304, 305, 306, 525, 553, 602) et un accumulateur de force (307, 308, 309, 530, 555, 603), dans lequel l'élément de fixation (252) est fixé à l'élément de support (24, 25, 113, 526), l'accumulateur de force (307, 308, 309, 530, 555, 603) est monté avec serrage entre l'élément d'appui (253, 304, 305, 306, 525, 553, 602) et l'élément de support (24, 25, 113, 526) et l'élément à dilatation longitudinale est disposé entre l'élément de fixation (252) et l'élément d'appui (253, 304, 305, 306, 525, 553, 602), dans lequel l'élément d'appui (253, 304, 305, 306, 525, 553, 602) est appuyé par adhérence sur le plateau de pression (12, 13, 200, 201).

4. Embrayage à friction selon l'une quelconque des revendications précédentes, **caractérisé en ce que** l'élément d'appui (253, 304, 305, 306, 525, 553, 602) s'appuie sur un bord situé radialement à l'intérieur ou sur un bord situé radialement à l'extérieur du plateau de pression (12, 13, 200, 201).

5. Embrayage à friction selon l'une quelconque des revendications précédentes, que le plateau de pression (12, 13, 200, 201) présente une saillie ou un épaulement, dans lequel l'élément d'appui (253, 304, 305, 306, 525, 553, 602) s'appuie sur un bord situé radialement à l'intérieur ou sur un bord situé radialement à l'extérieur de l'épaulement ou de la saillie du plateau de pression (12, 13, 200, 201).

6. Embrayage à friction selon au moins une des revendications précédentes, **caractérisé en ce que** le dispositif d'actionnement (4, 5) présente une multiplicité de dispositifs de rampe (16, 17, 109, 203, 352) et/ou une multiplicité d'actionneurs (4, 5, 102, 250, 300, 301, 302, 500, 501, 502, 503, 550, 600).

7. Embrayage à friction selon l'une quelconque des revendications précédentes, **caractérisé en ce que** le dispositif de rampe (16, 17, 109, 203, 352) présente au moins une rampe de montée et un élément de roulement (107) s'appuyant sur celle-ci, dans lequel le dispositif de rampe (16, 17, 109, 203, 352) est disposé entre le plateau de pression (12, 13, 200, 201) et le couvercle d'embrayage (8, 11, 104), dans lequel la rampe de montée est installée sur le plateau de pression (12, 13, 200, 201) et/ou sur le couvercle d'embrayage (8, 11, 104) et l'élément de roulement (107) est maintenu de façon rotative soit sur le couvercle d'embrayage (8, 11, 104), soit sur le plateau de pression (12, 13, 200, 201) soit entre une rampe de montée côté plateau de pression et côté couvercle d'embrayage.

8. Embrayage à friction selon l'une quelconque des revendications précédentes, **caractérisé en ce que** l'orientation des actionneurs (4, 5, 102, 250, 300, 301, 302, 500, 501, 502, 503, 550, 600) en direction périphérique est identique ou au moins quelques actionneurs (4, 5, 102, 250, 300, 301, 302, 500, 501, 502, 503, 550, 600) sont orientés en direction opposée en direction périphérique.

9. Embrayage à friction selon au moins une des revendications précédentes, **caractérisé en ce que** deux actionneurs (500, 503, 501, 502) sont fixés au moyen d'un élément de fixation commun (504).

10. Embrayage à friction selon au moins une des revendications précédentes, **caractérisé en ce que** deux actionneurs (520, 524) s'appliquent sur le plateau de pression (12, 13, 200, 201) au moyen d'un élément d'appui commun (525) et/ou sont poussés au moyen d'un accumulateur de force commun (523, 530).

11. Procédé d'actionnement d'un embrayage à friction (1) au moyen d'un dispositif d'actionnement (4, 5), l'embrayage à friction (1) présente un plateau de pression (12, 13, 200, 201), un contre-plateau de pression (10, 201) et un couvercle d'embrayage (8, 11, 104), dans lequel un disque d'embrayage (18, 19) peut être logé entre le plateau de pression (12, 13, 200, 201) et le contre-plateau de pression (10, 201), dans lequel le plateau de pression (12, 13, 200, 201) est de forme annulaire, le dispositif d'actionnement (4, 5) présente entre le plateau de pression (12, 13, 200, 201) et le couvercle d'embrayage (8, 11, 104) un nombre de dispositifs de rampe (16, 17, 109, 203, 352) pour le déplacement axial du plateau de pression (12, 13, 200, 201) et le dispositif d'actionnement (4, 5) présente en outre un nombre d'actionneurs (4, 5, 102, 250, 300, 301, 302, 500, 501, 502, 503, 550, 600) pour la rotation du plateau de pression (12, 13, 200, 201) en direction périphérique par rapport au couvercle d'embrayage (8, 11, 104), **caractérisé en ce que** les actionneurs (4, 5, 102, 250, 300, 301, 302, 500, 501, 502, 503, 550, 600) sont actionnés simultanément dans la direction d'entraînement et sont actionnés de façon décalée l'un par rapport à l'autre dans la direction opposée pour le retrait d'au moins quelques actionneurs (4, 5, 102, 250, 300, 301, 302, 500, 501, 502, 503, 550, 600).

12. Procédé pour actionner un embrayage à friction (1) au moyen d'un dispositif d'actionnement (4, 5), l'embrayage à friction (1) présente un plateau de pression (12, 13, 200, 201), un contre-plateau de pression (10, 201) et un couvercle d'embrayage (8, 11, 104), dans lequel un disque d'embrayage (18, 19) peut être logé entre le plateau de pression (12, 13, 200, 201) et le contre-plateau de pression (10, 201), dans lequel le plateau de pression (12, 13, 200, 201) est de forme annulaire, le dispositif d'actionnement (4, 5) présente entre le plateau de pression (12, 13, 200, 201) et le couvercle d'embrayage (8, 11, 104) un nombre de dispositifs de rampe (16, 17, 109, 203, 352) pour le déplacement axial du plateau de pression (12, 13, 200, 201) et le dispositif d'actionnement (4, 5) présente en outre au moins un actionneur (4, 5, 102, 250, 300, 301, 302, 500, 501, 502, 503, 550, 600) pour la rotation du plateau de pression (12, 13, 200, 201) en direction périphérique par rapport au couvercle d'embrayage (8, 11, 104), **caractérisé en ce qu'**au moins un actionneur (4, 5, 102, 250, 300, 301, 302, 500, 501, 502, 503, 550, 600) est déplacé plus lentement dans la direction d'entraînement que dans la direction opposée pour le retrait et lors du mouvement plus rapide dans la direction opposée l'accélération est tellement élevée que le plateau de pression (12, 13, 200, 201) ne peut pas, en raison de son inertie, suivre un élément d'appui (253, 304, 305, 306, 525, 553, 602) comme élément de friction de l'actionneur (4, 5, 102, 250, 300, 301, 302, 500, 501, 502, 503, 550, 600).

13. Procédé selon la revendication 11, **caractérisé en ce que**, en cas d'agencement de N actionneurs (4, 5, 102, 250, 300, 301, 302, 500, 501, 502, 503, 550, 600), dans la direction d'entraînement les actionneurs (4, 5, 102, 250, 300, 301, 302, 500, 501, 502, 503, 550, 600) sont actionnés simultanément et dans la direction opposée moins d'actionneurs (4, 5, 102, 250, 300, 301, 302, 500, 501, 502, 503, 550, 600) des N actionneurs (4, 5, 102, 250, 300, 301, 302, 500, 501, 502, 503, 550, 600) sont actionnés comme actionneurs (4, 5, 102, 250, 300, 301, 302, 500, 501, 502, 503, 550, 600) non actionnés et les actionneurs (4, 5, 102, 250, 300, 301, 302, 500, 501, 502, 503, 550, 600) sont actionnés l'un après l'autre dans la direction opposée.

14. Procédé selon la revendication 11, **caractérisé en ce que**, en cas d'agencement de trois actionneurs (4, 5, 102, 250, 300, 301, 302, 500, 501, 502, 503, 550, 600), dans la direction d'entraînement les trois actionneurs (4, 5, 102, 250, 300, 301, 302, 500, 501, 502, 503, 550, 600) sont actionnés simultanément et dans la direction opposée chaque fois un actionneur (4, 5, 102, 250, 300, 301, 302, 500, 501, 502, 503, 550, 600) est actionné, tandis que les deux actionneurs restants (4, 5, 102, 250, 300, 301, 302, 500, 501, 502, 503, 550, 600) ne sont pas actionnés et que les actionneurs (4, 5, 102, 250, 300, 301, 302, 500, 501, 502, 503, 550, 600) sont actionnés l'un après l'autre dans la direction opposée.

15. Procédé selon la revendication 13, **caractérisé en ce que** pour le nombre d'actionneurs des actionneurs non actionnés (4, 5, 102, 250, 300, 301, 302, 500, 501, 502, 503, 550, 600) par rapport au nombre d'actionneurs des actionneurs actionnés (4, 5, 102, 250, 300, 301, 302, 500, 501, 502, 503, 550, 600) on a: 3:1, 4:1, 3:2, 5:1, 4:2, 6:1, 5:2 ou 4:3.
